(19) Europäisches Patentamt
European Patent Office
Office européen des brevets

(11) EP 3 728 513 B1

(12) # FASCICULE DE BREVET EUROPEEN

(45) Date de publication et mention de la délivrance du brevet:
**27.11.2024 Bulletin 2024/48**

(21) Numéro de dépôt: **18847267.4**

(22) Date de dépôt: **20.12.2018**

(51) Classification Internationale des Brevets (IPC):
***C09K 11/06*** *(2006.01)* ***G01T 1/203*** *(2006.01)*
***G01T 1/20*** *(2006.01)*

(52) Classification Coopérative des Brevets (CPC):
**C09K 11/06; G01T 1/201; G01T 1/203; G01T 1/2033**

(86) Numéro de dépôt international:
**PCT/FR2018/053495**

(87) Numéro de publication internationale:
**WO 2019/122773 (27.06.2019 Gazette 2019/26)**

(54) **MATERIAU HYBRIDE SCINTILLANT, PROCÉDÉS DE SON FABRICATION, LE DISPOSITIF ET PROCÉDÉ DE MESURE PAR SCINTILLATION PLASTIQUE**

SZINTILLIERENDES HYBRIDMATERIAL, VERFAHREN ZU SEINER HERSTELLUNG, ZUGEHÖRIGE VORRICHTUNG UND VERFAHREN ZUR MESSUNG DER SZINTILLATION

SCINTILLATING HYBRID MATERIAL, METHODS FOR PRODUCING IT, ASSOCIATED DEVICE AND SCINTILLATION MEASUREMENT METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2017 FR 1763196**
**24.12.2017 FR 1763197**
**24.12.2017 FR 1763198**

(43) Date de publication de la demande:
**28.10.2020 Bulletin 2020/44**

(73) Titulaire: **Commissariat à l’Energie Atomique et aux Energies Alternatives**
**75015 Paris (FR)**

(72) Inventeurs:
- **HAMEL, Matthieu**
**50100 CHERBOURG-OCTEVILLE (FR)**
- **BERTRAND, Guillaume**
**07380 Meyras (FR)**

(74) Mandataire: **Hege, Frédéric**
**Hege Conseils**
**1 Place Gutenberg**
**67000 Strasbourg (FR)**

(56) Documents cités:

| | |
|---|---|
| EP-A1- 0 413 010 | EP-A1- 2 655 546 |
| EP-B1- 0 413 010 | EP-B1- 2 655 546 |
| WO-A1-2013/076281 | WO-A1-2014/135640 |
| WO-A1-2015/118533 | GB-A- 1 377 703 |
| US-A- 4 788 436 | US-A- 5 420 959 |
| US-A- 5 606 638 | US-A1- 2004 104 500 |
| US-A1- 2012 241 630 | US-A1- 2014 332 689 |

- **ANNA PLA-DALMAU ET AL: "Extruded Plastic Scintillation Detectors", ARXIV.ORG, CORNELL UNIVERSITY LIBRARY, 201 OLIN LIBRARY CORNELL UNIVERSITY ITHACA, NY 14853, 5 April 1999 (1999-04-05), XP080656457**
- **PLA-DALMAU A ET AL: "Extruding plastic scintillator at Fermilab", 2003 IEEE NUCLEAR SCIENCE SYMPOSIUM CONFERENCE RECORD. / 2003 IEEE NUCLEAR SCIENCE SYMPOSIUM AND MEDICAL IMAGING CONFERENCE. PORTLAND, OR, OCT. 19 - 25, 2003; [IEEE NUCLEAR SCIENCE SYMPOSIUM CONFERENCE RECORD], NEW YORK, NY : IEEE, US, 19 October 2003 (2003-10-19), pages 102 - 104Vol.1, XP010740226, ISBN: 978-0-7803-8257-2**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 728 513 B1

## Description

### DOMAINE TECHNIQUE

La présente invention appartient au domaine de la mesure de la radioactivité par la technique de scintillation plastique.

L'invention concerne plus particulièrement un matériau pour la mesure par scintillation plastique, une pièce comprenant le matériau et son dispositif ou appareillage de mesure associé, les procédés de fabrication associés, ainsi que le procédé de mesure par scintillation plastique à l'aide du dispositif.

### ARRIERE-PLAN TECHNIQUE

La mesure par scintillation plastique consiste à déterminer la présence et/ou la quantité d'une ou plusieurs matières radioactives, notamment en physique, géologie, biologie, médecine, pour la datation, la surveillance de l'environnement ou le contrôle de la non-prolifération des armes nucléaires.

En pratique, la matière radioactive émettant un rayonnement ionisant ou une particule ionisante (particule alpha, électron, positon, photon, neutron,...) est exposée à un matériau scintillant dit «scintillateur plastique» qui convertit le dépôt énergétique issu de l'interaction rayonnement/matière en un rayonnement lumineux (dit radioluminescent) mesurable par un convertisseur photon-électron à gain, comme par exemple un photomultiplicateur.

Le scintillateur plastique est connu depuis le milieu du XX$^{ème}$ siècle. Il est décrit par exemple dans le document « Moser, S. W.; Harder, W. F.; Hurlbut, C. R.; Kusner, M. R. ; "Principles and practice of plastic scintillator design", Radiat. Phys. Chem., 1993, Vol. 41, No. l/2, 31-36» [référence 1] et « Bertrand, G. H. V.; Hamel, M.; Sguerra, F. ; "Current status on plastic scintillators modifications", Chem. Eur. J., 2014, 20, 15660-15685 » [référence 2]. Il se présente généralement sous forme d'une matrice polymérique dans laquelle est inséré un fluorophore primaire voire un fluorophore secondaire. Un fluorophore est un composé chimique capable d'émettre de la lumière visible de fluorescence après excitation par des photons ou d'autres particules incidentes. Le fluorophore primaire et le fluorophore secondaire sont constitués d'une molécule aromatique aux propriétés fluorescentes (molécule appelée fluorophore) permettant la détection par scintillation.

La matrice polymérique a pour fonction principale d'être un support apte à recevoir l'énergie du rayonnement ionisant ou de la particule ionisante. Après recombinaison des espèces excitées et/ou ionisées qui se forment alors, cette énergie est convertie en rayonnement radioluminescent puis transférée au fluorophore primaire et éventuellement au fluorophore secondaire, ce qui peut augmenter la longueur d'onde du rayonnement émis par le fluorophore primaire afin d'en améliorer la détection.

Un scintillateur plastique particulier de type phoswich (néologisme anglo-saxon résultant de la combinaison des termes phosphore et sandwich généralement traduit par signifiant « scintillateur en sandwich ») a été proposé dès le début du développement des scintillateurs plastiques dans le document « Wilkinson D. H. , "The Phoswich - A Multiple Phosphor", Rev. Sci. Instrum. 1952, 23, 414-417. » [référence 3].

En vue d'obtenir de nouvelles propriétés de scintillation, un scintillateur phoswich combine au moins deux compartiments : un compartiment comprenant un scintillateur lent d'une part (constante de décroissance de fluorescence élevée, généralement comprise entre 200 ns et 1000 ns) et un autre compartiment comprenant un scintillateur rapide (constante de décroissance de fluorescence beaucoup plus faible, généralement comprise entre 2 ns et 7 ns d'autre part).

Un tel scintillateur pose néanmoins au moins un des problèmes suivants :

- la différence entre la constante de décroissance de fluorescence du compartiment rapide et celle du compartiment lent est trop faible : la séparation des impulsions de scintillation entre ces étages n'est alors pas possible électroniquement ;
- la différence entre la constante de décroissance de fluorescence du compartiment rapide et celle du compartiment lent est trop importante : l'impulsion de scintillation du scintillateur lent peut être partiellement ou totalement masquée dans le bruit de fond électronique de l'appareil d'acquisition de l'impulsion scintillante, ce qui mène à l'obtention de valeurs erronées.
- l'acquisition du signal luminescent est réalisée sur une durée qui est typiquement d'environ 6 à 10 fois la constante de décroissance de fluorescence du compartiment lent. En cas de fort taux de comptage dû à la multiplicité des particules ionisantes ou la forte intensité du rayonnement ionisant en interaction avec le scintillateur phoswich, la probabilité d'empilement (c'est-à-dire deux impulsions présentes dans la même fenêtre temporelle d'acquisition) des impulsions de scintillation devient de plus en plus importante. De ce fait, il se peut que plusieurs impulsions apparaissent dans la même fenêtre temporelle d'acquisition, ce qui entraine un rejet des empilements par phénomène de saturation de l'électronique d'acquisition, et donc une sous-estimation du taux de comptage.

Par ailleurs, le document WO 2015/118533 A1 décrit une formulation destinée à l'impression 3D de scintillateurs, notamment de scintillateurs plastiques. A condition de faire l'hypothèse en l'absence d'indication explicite dans ce document que les pourcentages indiqués sont des pourcentages en poids, la formulation (h) comprendrait 94,52 % molaire de naphtalène et 5,48 % molaire de 2,5-diphényloxazole (PPO) en tant que fluorophore primaire supplémentaire par rapport au nombre total de moles de fluorophore primaire dans la formulation, ainsi que le prépolymère TMPTA.

Le document US 2014/332689 A1 vise à protéger un scintillateur plastique comprenant une matrice polymérique à base de cycles aromatiques dans laquelle est incorporé de l'oxazole. Dans un exemple destiné à illustrer le principe de la discrimination (PSD : Pulse Shape Discrimination) entre rayonnement gamma et neutron, les inventeurs utilisent un matériau pour la scintillation plastique ne correspondant pas à l'invention revendiquée. Ce matériau ne comprend donc pas de l'oxazole, mais 10 % de naphtalène, 0,1 % de PPO et 0,1 % de 1,4-bis(5-phényl-2-oxazolyl)benzène (POPOP) incorporés dans une matrice polymérique en polystyrène. De nouveau, à condition de faire l'hypothèse en l'absence d'indication explicite dans ce document que les pourcentages indiqués sont des pourcentages en poids, le matériau scintillateur plastique de la Figure 8 comprendrait 99,42 % molaire de naphtalène et 0,58 % molaire de PPO par rapport au nombre total de moles de fluorophore primaire.

Le document EP 2 655 546 A1 décrit un scintillateur organique solide comprenant une matrice polymérique, dans laquelle sont dispersés un ou plusieurs composés fluorophores et un ou plusieurs éléments chimiques présentant un numéro atomique allant de 40 à 83 (D2, abrégé). Il ne mentionne pas l'utilisation de naphtalène en tant que fluorophore primaire principal.

Le document GB 1 377 703 A décrit une composition de scintillation comprenant 0,05 % à 10 % d'un composé de formule (I) dissous dans un liquide organique transparent ou un *« solvant plastique »* constitué de polymères. Une solution cocktail de scintillation est réalisée dans les Exemples 1 et 2 : elle comprend 5 g/l de PPO en tant que fluorophore primaire, 0,1 g/l d'aminocoumarine en tant que fluorophore secondaire et 120 g/l de naphtalène dans le dioxane en tant que solvant. Rapporté en pourcentage molaire, cela équivaut à un mélange fluorescent liquide comprenant 97,64 % de naphtalène et 2,36 % de PPO. Toutefois, ces solutions ne comprennent pas de monomères ou d'oligomères destinés à former une matrice polymérique, ou les polymères en résultant.

## EXPOSE DE L'INVENTION

Un des buts de l'invention est donc d'éviter ou d'atténuer un ou plusieurs des inconvénients décrits ci-dessus, en proposant un nouveau type de matériau constitutif d'un scintillateur plastique dit « matériau hybride ».

La présente invention concerne un matériau hybride pour la mesure par scintillation plastique comprenant (voire consistant en) :

- une matrice polymérique ; et,
- un mélange fluorescent incorporé dans la matrice polymérique et comprenant en concentration molaire par rapport au nombre total de moles de fluorophore primaire dans le mélange fluorescent incorporé :

  i) 95,6 % à 99,1 % molaire d'un fluorophore primaire principal constitué de naphtalène ; et

  ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 ; préférentiellement supérieur à 0,5, typiquement compris entre 0,5 et 1.

Le matériau hybride de l'invention peut également exclure certains composés, notamment lorsque ce matériau est mis en oeuvre selon l'invention décrite ci-après, notamment pour la pièce, le dispositif, l'appareillage et leurs procédés associés. Plus particulièrement, il ne comprend pas un ou plusieurs des composés suivants, en particulier par rapport au poids total du matériau :

- un initiateur de polymérisation, tel que par exemple un photoinitiateur, particulièrement du TPO (2,4,6-Trimethylbenzoyl-diphenyl-phosphineoxide), plus particulièrement 0,5 % en poids de TPO. L'utilisation d'un photoiniateur pour amorcer la polymérisation peut en effet conduire à des scintillateurs avec un rendement de scintillation plus faible, voire contenant des fluorophores sujets à un photoblanchiment par la source photonique d'activation ; et/ou
- 15 % de naphtalène, 1,5 % de PPO, 0,08 % de POPOP, 0,5 % de TPO et le reste de TMPTA (triméthylolpropanetriacrylate éthoxylé); et/ou
- 10 % de naphtalène, 0,1 % de PPO, 0,1 % de POPOP et le reste de polystyrène ; et/ou
- un composé métallique (à savoir un composé minéral ou organométallique) comprenant un élément métallique choisi par exemple parmi le plomb, l'étain, le bismuth, ou leurs mélanges. Un tel élément métallique peut diminuer

le rendement de scintillation ; et/ou
- un fluorophore secondaire.

Une ou plusieurs des exclusions de ces composés peut également s'appliquer à la composition de polymérisation et/ou au kit prêt à l'emploi selon l'invention tels qu'ils sont décrits ci-après.

Un solvant apolaire convenant pour une mesure du rendement quantique de fluorescence est par exemple le cyclohexane, le toluène, le dichlorométhane, le xylène ou tout isomère du xylène.

Le matériau pour la mesure par scintillation plastique selon l'invention peut être également désigné dans la présente description par l'expression « scintillateur plastique ». Il est dit « hybride » car sa constante de décroissance de fluorescence est intermédiaire entre celle d'un scintillateur plastique rapide et d'un scintillateur plastique lent. Avantageusement, la valeur de cette constante peut en outre être choisie de manière optimale lors de la fabrication du matériau hybride dans une gamme intermédiaire comprise entre 10 ns et 90 ns (préférentiellement entre 15 ns et 80 ns), parmi des valeurs entre ces deux extrêmes qui, à la connaissance de l'inventeur, ne sont pas obtenues avec les scintillateurs plastiques actuellement commercialisés. Elle peut particulièrement être choisie entre 25 ns et 75 ns, plus particulièrement entre 28 ns et 70 ns.

Cette accordabilité temporelle de la constante de décroissance de fluorescence du matériau hybride est rendue possible grâce à l'utilisation d'un mélange fluorescent spécifique. Ce mélange se caractérise notamment par le choix combiné du naphtalène en tant que fluorophore primaire principal et d'un fluorophore primaire supplémentaire aux propriétés photophysiques spécifiques, ainsi que par le choix d'un rapport défini de concentration entre ces deux fluorophores primaires.

De manière inattendue, comme montré par les exemples de réalisation, le fluorophore primaire principal et le fluorophore primaire supplémentaire agissent en synergie pour faire varier très sensiblement, tout en utilisant une gamme de concentration réduite pour le fluorophore primaire supplémentaire, la constante de décroissance de fluorescence. En outre, la relative simplicité de ce système qui requiert essentiellement cette combinaison entre ces deux fluorophores primaires évite l'ajout d'une molécule supplémentaire éventuellement perturbatrice ou coûteuse. Ces propriétés avantageuses font du matériau hybride de l'invention un matériau particulièrement efficace pour la mesure en scintillation plastique et pouvant être aisément produit à une échelle industrielle à un coût modéré.

À contre-courant des voies d'amélioration suivies par l'état de la technique, l'invention ne consiste pas en l'utilisation d'une nouvelle matrice polymérique, l'ajout d'additif au scintillateur plastique ou le développement en tant que fluorophore primaire de nouvelles familles de molécules («quantum dots », complexes organométalliques, nanoparticules,...) afin de pallier à au moins un des inconvénients précités, mais identifie le mélange fluorescent de l'invention qui permet d'accéder à un matériau hybride. L'ensemble des caractéristiques nécessaires au matériau pour la mesure par scintillation plastique selon l'invention peut ainsi être essentiellement limité à une matrice polymérique et au mélange fluorescent incorporé. La composition du scintillateur plastique est ainsi simplifiée en s'affranchissant de la difficulté à déterminer très précisément la proportion adéquate entre un fluorophore primaire et un fluorophore secondaire en vue d'obtenir un rayonnement de radioluminescence et une constante de décroissance de fluorescence qui soient optimisés. Ainsi, comme indiqué précédemment, selon un mode de réalisation particulier, le matériau hybride de l'invention ne comprend pas de fluorophore secondaire.

À l'échelle moléculaire, le scintillateur plastique de l'invention peut être considéré comme un pseudo liquide, car les chaînes des polymères constituant tout ou partie de la matrice polymérique sont labiles et autorisent une certaine liberté de mouvement aux différents constituants du scintillateur plastique. À l'échelle macroscopique, le scintillateur plastique garde néanmoins une tenue mécanique suffisante en vue de fabriquer une pièce pour la détection par scintillation.

L'invention est complétée par les objets et/ou caractéristiques suivantes, pris seuls ou selon l'une quelconque de leurs combinaisons techniquement possibles.

Dans la présente description de l'invention, un verbe tel que «comprendre», «incorporer», «inclure», «contenir» et ses formes conjuguées sont des termes ouverts et n'excluent donc pas la présence d'élément(s) et/ou étape(s)

Plus précisément, au moins un monomère peut être choisi parmi le styrène, le vinyltoluène, le vinylxylène, le 1-vinylbiphényle, le 2-vinylbiphényle, le 1-vinylnaphtalène, le 2-vinylnaphtalène, le 1-méthylnaphtalène, le N-vinylcarbazole, le (méth)acrylate de méthyle, l'acide (méth)acrylique ou le (méth)acrylate de 2-hydroxyéthyle, voire plus généralement un méthacrylate d'alkyle dont le groupement alkyle linéaire ou ramifié comporte entre 1 et 20 atomes de carbones.

De préférence, le monomère est le styrène ou le vinyltoluène afin de former l'homopolymère correspondant.

De manière avantageuse, le monomère peut être choisi plus particulièrement parmi une molécule aux propriétés de fluorescence particulière, par exemple le 1-vinylbiphényle, le 2-vinylbiphényle, le 1-vinylnaphtalène, le 2-vinylnaphtalène, le 1-méthylnaphtalène, le N-vinylcarbazole ou leurs mélanges.

Selon un mode de réalisation particulier, la matrice polymérique du matériau hybride de l'invention ne comprend pas en totalité ou en partie au moins un polymère comprenant des unités répétitives issues de la polymérisation de

monomères ou oligomères comprenant un groupement triacrylate et/ou triméthylacrylate ; ce qui exclut de la matrice polymérique un polymère tel que par exemple le TMPTA (triméthylolpropanetriacrylate éthoxylé), en particulier du TMPTA éthoxylé (15). Avantageusement, cela permet d'exclure un polymère aux propriétés mécaniques cassantes.

La matrice polymérique peut être constituée en totalité ou en partie (de préférence plus de 10 % en masse de polymère dans la matrice polymérique) d'au moins un polymère réticulé (par exemple au moyen d'un agent de réticulation) dans lequel des chaînes polymériques sont reliées entre elles par des ponts de réticulation, afin notamment d'améliorer les propriétés mécaniques et/ou de scintillation. L'agent de réticulation peut être un monomère comprenant au moins deux fonctions polymérisables aptes après polymérisation à former un pont entre deux chaînes de polymère. Il peut être choisi parmi le divinylbenzène, un diacrylate ou un diméthacrylate d'alkyle, la chaîne hydrogénocarbonée de ces deux derniers contenant entre 2 et 20 atomes de carbone.

De préférence, l'agent de réticulation est le diméthacrylate de 1,4-butanediyle ou le divinylbenzène.

Après polymérisation du polymère réticulé, outre les unités répétitives susmentionnées, le copolymère obtenu peut comprendre des unités répétitives issues de la polymérisation de l'agent de réticulation.

Concernant un des autres constituants principaux du matériau hybride de l'invention qu'est le mélange fluorescent incorporé dans la matrice polymérique, le matériau hybride peut comprendre 1 % massique à 25 % massique du mélange fluorescent incorporé, voire 1 % massique à 5 % massique du mélange fluorescent incorporé par rapport à la masse totale de matériau hybride. Au-delà d'une concentration massique de 25 %, une exsudation peut se produire, à savoir un suintement du mélange fluorescent hors du scintillateur plastique.

La concentration massique du mélange fluorescent incorporé dans le matériau hybride peut être calculée aisément en déterminant la masse de la matrice polymérique.

Une des méthodes de l'homme du métier est la suivante : la concentration molaire des monomères et des oligomères dans le milieu de polymérisation est connue par avance ou peut être déterminée par une méthode de mesure quantitative telle que la spectrophotométrie UV. La concentration massique correspondante est ensuite calculée à partir des poids moléculaires. Or, les monomères, les oligomères ou leurs mélanges forment la matrice polymérique selon un rendement de polymérisation qui peut être mesuré auparavant, mais qui est généralement supérieur à 95 %, voire 98 %, voire le plus souvent égal à 100 %. Dès lors, la proportion massique des monomères et des oligomères présents dans la matrice polymérique est équivalente à ce rendement réactionnel multiplié par la concentration massique préalablement déterminée. L'homme du métier peut donc aisément à l'aide de ses connaissances générales convertir une concentration massique en une concentration molaire pour l'ensemble des constituants du matériau hybride.

Les pourcentages massiques ou molaires du mélange fluorescent incorporé, du fluorophore primaire principal, du fluorophore primaire supplémentaire, du fluorophore secondaire ou d'un composé supplémentaire peuvent être déterminés a posteriori dans le matériau hybride par une technique d'analyse telle que par exemple la Résonance Magnétique Nucléaire (RMN) du solide. Une autre technique consiste à dissoudre le scintillateur plastique dans le dichlorométhane, précipiter dans le méthanol le polymère constitutif de la matrice polymérique, filtrer le mélange obtenu pour récupérer la molécule dont on souhaite mesurer la concentration, puis la quantifier par analyse élémentaire avec détection d'un atome spécifique constitutif de cette molécule.

L'incorporation du mélange fluorescent dans la matrice polymérique peut être exécutée selon plusieurs modes de réalisation. En particulier, au moins une molécule fluorescente choisie parmi le fluorophore primaire principal, le fluorophore primaire supplémentaire ou leurs mélanges peut être incorporée à la matrice polymérique par dispersion ou par greffage de cette molécule dans la matrice polymérique. Dans le cas du greffage, la molécule fluorescente (généralement le fluorophore primaire supplémentaire) est liée à la matrice polymérique de manière covalente. Cette liaison covalente est formée par exemple lors de la fabrication par polymérisation de la matrice polymérique, la molécule fluorescente comportant au moins une fonction polymérisable.

Optionnellement, le matériau hybride de l'invention peut contenir une ou plusieurs matières n'ayant pas d'impact significatif sur la mesure par scintillation plastique avec le matériau hybride de l'invention ou améliorant certaines de ses propriétés. Tout comme le mélange fluorescent incorporé, ces matières sont généralement dispersées de manière homogène ou non dans le matériau hybride.

La constante de décroissance du matériau hybride de l'invention est conférée par celle du mélange fluorescent incorporé. Ainsi, le mélange fluorescent incorporé, et donc le matériau hybride, peut avoir une constante de décroissance de fluorescence comprise entre 10 ns et 90 ns, voire comprise entre 15 ns et 80 ns, avantageusement comprise entre 30 ns et 80 ns, particulièrement entre 25 ns et 75 ns, plus particulièrement entre 28 ns et 70 ns.

La concentration judicieusement choisie en fluorophore primaire principal et la concentration complémentaire en fluorophore primaire supplémentaire confèrent au mélange fluorescent incorporé, et donc au matériau hybride, la une constante de décroissance de fluorescence désirée.

Le mélange fluorescent incorporé comprend i) 95,6 % à 99,1 % molaire du fluorophore primaire principal constitué de naphtalène et ii) 0,9 % à 4,4 % molaire du fluorophore primaire supplémentaire. Selon cette gamme de concentration, la constante de décroissance de fluorescence du matériau hybride de l'invention peut être comprise entre 25 ns à 75 ns, plus particulièrement entre 28 ns et 70 ns.

Ces gammes préférentielles de concentration en fluorophores primaires peuvent donc conférer au matériau hybride une constante de décroissance de fluorescence de plus en plus élevée : un tel matériau hybride peut alors avantageusement rentrer dans la composition d'un compartiment scintillateur plastique hybride, éventuellement combiné avec un compartiment scintillateur plastique rapide dans un dispositif de détection par scintillation plastique de type phoswich pour améliorer la discrimination entre particule bêta et rayonnement gamma. Elles représentent par ailleurs un bon compromis entre le rendement de scintillation et l'accordabilité du matériau hybride de l'invention.

Par exemple, les concentrations molaires variables du fluorophore primaire principal dans le mélange fluorescent incorporé (le reste du mélange étant constitué par le fluorophore primaire supplémentaire) peuvent éventuellement conférer au matériau hybride les constantes de décroissance de fluorescence suivantes :

- concentration molaire de 86 % : 15 ns (ne faisant pas l'objet de la protection demandée);
- concentration molaire de 95,6 % : 28 ns ;
- concentration molaire de 96 % : 35 ns ;
- concentration molaire de 99 % : 80 ns ;
- concentration molaire de 100 % : 90 ns (ne faisant pas l'objet de la protection demandée).

Préférentiellement, le fluorophore primaire supplémentaire a une constante de décroissance de fluorescence (généralement désignée « tau ») comprise entre 1 ns et 10 ns, a un spectre d'absorption lumineuse et un spectre d'émission de fluorescence dont le centroïde est respectivement à une longueur d'onde comprise entre 250 nm et 340 nm et comprise entre 330 nm et 380 nm, et dont le rendement quantique de fluorescence dans un solvant apolaire est compris entre 0,5 et 1.

Dans la présente description, le centroïde désigne la longueur d'onde pour le milieu de la largeur à mi-hauteur de la bande d'amplitude la plus importante du rayonnement considéré. Un spectre d'absorption lumineuse peut être mesuré avec un spectrophotomètre UV/visible, et un spectre d'émission de fluorescence avec un spectrofluorimètre.

La constante de décroissance de fluorescence correspond à la variation au cours du temps de l'intensité de photoluminescence. Elle est mesurée par comptage de photon unique résolu en temps ; tel que décrit par exemple dans le document « M. Wahl, "Time-Correlated Single Photon Counting", M. Wahl, note technique de la société PicoQuant, 2014 » [référence 4], disponible en ligne à l'adresse Internet suivante :

« https://www.picoquant.com/images/uploads/page/files/7253/t echnote_tcspc.pdf »,
ainsi que le livre « D. V. O'Connor, D. Phillips, "Time Correlated Single Photon Counting", Academic Press, New York, 1984, pages 25 à 34 » [référence 5].

Le rendement quantique de fluorescence correspond à la proportion de photons de luminescence émis par quantité de photons absorbés par le matériau hybride. De préférence, sa valeur est obtenue selon une méthode de mesure absolue, à savoir ne faisant pas intervenir un composé tiers et une fonction d'étalonnage. Il est par exemple mesuré avec une sphère d'intégration en tant que module d'un spectrofluorimètre. Pour une mesure de la valeur absolue, on peut se référer au document « Rohwer, L. S., Martin, J. E. ; "Measuring the absolute quantum efficiency of luminescent materials", J. Lumin. 2005, 115, pages 77-90 » [référence 6]).

La valeur du rendement quantique de fluorescence peut également être obtenue selon une méthode de mesure relative dont le principe est le suivant : connaissant le rendement quantique de fluorescence absolu d'un composé tiers, la valeur de la mesure absolue est obtenue par une simple règle de trois. Par exemple, sans sphère d'intégration, le rendement quantique de fluorescence peut être déterminé par mesure relative de l'échantillon (une solution de référence de sulfate de quinine en tant que composé tiers est par exemple utilisée dans le document « Velapoli, R. A.; Mielenz, K. D., "A Fluorescence Standard référence Material: Quinine Sulfate Dihydrate", Appl. Opt., 1981, 20, 1718. » [référence 7] disponible en ligne à l'adresse Internet suivante : https ://www.nist.gov/sites/default/files/documents/srm/SP260 -64.PDF).

Généralement, les valeurs obtenues par la méthode de mesure absolue et relative sont identiques ou similaires.

Avantageusement, le fluorophore primaire supplémentaire peut avoir un spectre d'émission de fluorescence dont le centroïde est à une longueur d'onde comprise entre 355 nm et 365 nm, typiquement centrée vers 360 nm, de telle sorte que l'effet d'interaction soit optimal avec le fluorophore secondaire.

Le comptage de photon unique résolu en temps est une technique de spectroscopie permettant de mesurer la constante de décroissance de fluorescence de composés photoluminescents ou de leurs mélanges. Il consiste à exciter au moyen d'un faisceau lumineux de décroissance rapide (par rapport au rayonnement luminescent émis en retour à observer) un fluorophore ou un mélange fluorescent, puis à observer au moyen d'un monochromateur couplé à un photomultiplicateur la résultante de photoluminescence. Le matériau hybride de l'invention est plus particulièrement excité avec une fréquence faible (typiquement jusqu'à 1 MHz) pour éviter tout empilement d'impulsions de scintillation.

Préférentiellement, le fluorophore primaire supplémentaire est choisi parmi au moins un composé tel que :

- un oxazole (tel que par exemple le 2,5-diphényloxazole (PPO)) ; et/ou
- un composé aromatique polycyclique qui est hydrogénocarboné (à savoir sans hétéroatome) comprenant de 3 à 6 cycles phényles dont au moins un cycle phényle comprend éventuellement au moins un substituant en position ortho, méta ou de préférence para (par exemple un substituant alkyle R linéaire ou ramifié, de préférence saturé, comprenant de préférence de 1 à 10 atomes de carbone, préférentiellement de 1 à 4 atomes de carbone) tel que par exemple le [para]-terphényle (pTP), le *[meta]*-terphényle (mTP), le [*para*]-quaterphényle, le biphényle, le 1-vinylbiphényle, le 2-vinylbiphényle, le 4-isopropylbiphényle, le [*para*]-sexiphényle), ou leurs mélanges ; et/ou
- un oxadiazole, tel que par exemple le 2-phényl-5-(4-biphényl)-1,3,4-oxadiazole (PBD), le 2-(4'-t-butylphényl)-5-(4"-biphénylyl)-1,3,4-oxadiazole (Butyl-PBD) ou leurs mélanges ; et/ou
- un composé de la famille des anthracènes tels que l'anthracène le méthacrylate de 9-anthracényle ou leurs mélanges ; et/ou
- un naphtalène substitué par un groupement vinyle (tel que le 1-vinylnaphtalène ou le 2-vinylnaphtalène), un naphtalène substitué par un substituant R tel que défini précédemment (tel que par exemple le 1-méthylnaphtalène) ou leurs mélanges ; et/ou
- un carbazole tel que par exemple le N-vinylcarbazole, le *N*-éthylcarbazole, le *N*-(2-éthylhexyl)carbazole ou leurs mélanges ; et/ou
- le tétraphénylbutadiène.

Plus particulièrement, le fluorophore primaire supplémentaire est le 2,5-diphényloxazole (PPO), le [*para*]-terphényle (pTP), voire le *[meta]*-terphényle (mTP) ou leurs mélanges.

Comme indiqué précédemment, le fluorophore primaire supplémentaire peut être lié de manière covalente à la matrice polymérique, par exemple via la polymérisation d'une fonction vinylique, allylique, acrylique ou méthacrylique portée par le fluorophore primaire supplémentaire. À titre d'exemple, 1-vinylbiphényle, le 2-vinylbiphényle, le 1-vinylnaphtalène, le 2-vinylnaphtalène, le 1-méthylnaphtalène, le *N*-vinylcarbazole peuvent être utilisés en vue d'être liés par liaison covalente afin de former un copolymère avec la matrice polymérique.

Le mélange fluorescent incorporé peut en outre comprendre un fluorophore secondaire. Le fluorophore secondaire améliore encore la détection du rayonnement radioluminescent.

La concentration massique du fluorophore secondaire par rapport à la masse du matériau hybride peut être comprise entre 0,002 % et 0,5 % massique, préférentiellement entre 0,01 % et 0,2 % massique, encore plus préférentiellement entre 0,01 % et 0,1 % massique.

À titre d'exemple, le fluorophore secondaire peut être choisi parmi le l,4-di[2(5-phényloxazolyl)]benzène, le 1,4-bis-(2-méthylstyryl)-benzène, le 1,4-bis(4-méthyl-5-phényl-2-oxazolyl)benzène, le 9,10-diphénylanthracène ou leurs mélanges. La matrice polymérique comprend alors, par rapport à la masse du matériau hybride, 0,002 % massique à 0,2 % massique du fluorophore secondaire.

Selon un premier mode de réalisation, le fluorophore secondaire peut être choisi de telle sorte qu'il ait un spectre d'absorption lumineuse et un spectre d'émission de fluorescence dont le centroïde est respectivement à une longueur d'onde comprise entre 330 nm et 380 nm et comprise entre 405 nm et 460 nm, et dont le rendement quantique de fluorescence dans un solvant apolaire est compris entre 0,5 et 1. Le fluorophore secondaire peut ainsi être choisi parmi le 1,4-bis(5-phényl-2-oxazolyl)benzène (POPOP), le 1,4-bis(4-méthyl-5-phényl-2-oxazolyl)benzène (diméthylPOPOP), le bis-méthylstyrylbenzène (bis-MSB), le 9,10-diphénylanthracène (9,10-DPA) ou leurs mélanges. Les structures moléculaires de ces fluorophores secondaires sont illustrées ci-dessous.

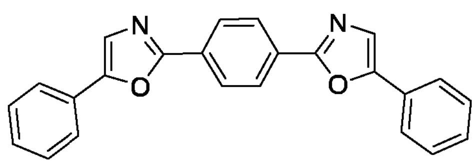

POPOP

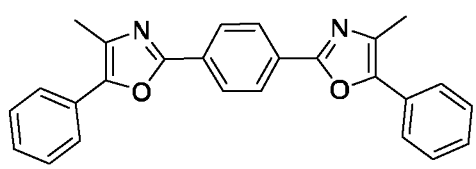

diméthylPOPOP

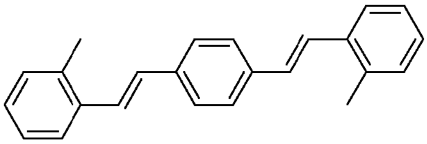

bis-MSB

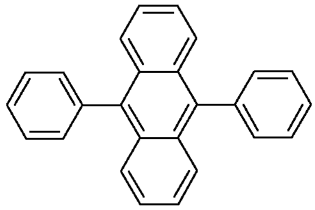

9,10-DPA

Selon un deuxième mode de réalisation, le fluorophore secondaire peut être choisi de telle sorte qu'il ait un spectre d'absorption lumineuse et un spectre d'émission de fluorescence dont le centroïde est respectivement à une longueur d'onde comprise entre 330 nm et 380 nm et comprise entre 460 nm et 550 nm, et dont le rendement quantique de fluorescence dans un solvant apolaire est compris entre 0,5 et 1. Le fluorophore secondaire peut alors être choisi parmi la coumarine 6, la coumarine 7, la coumarine 30, la coumarine 102, la coumarine 151, la coumarine 314, la coumarine 334, la 3-hydroxyflavone ou leurs mélanges. Les structures moléculaires de ces fluorophores secondaires sont illustrées ci-dessous.

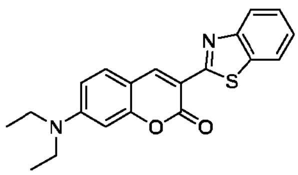

Coumarin 6

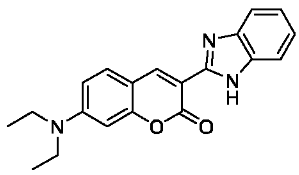

Coumarin 7

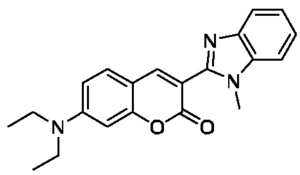

Coumarin 30
Coumarin 515

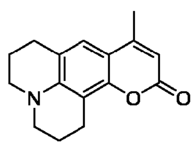

Coumarin 102
Coumarin 480

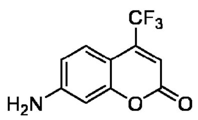

Coumarin 151

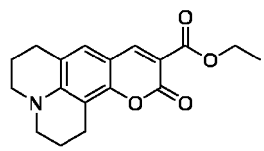

Coumarin 314
Coumarin 504

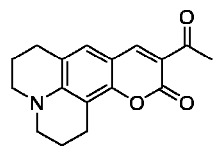

Coumarin 334

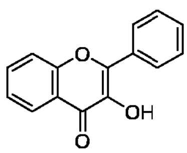

3-hydroxyflavone

Selon un troisième mode de réalisation, le fluorophore secondaire peut être choisi de telle sorte qu'il ait un spectre d'absorption lumineuse et un spectre d'émission de fluorescence dont le centroïde est respectivement à une longueur d'onde comprise entre 330 nm et 380 nm et comprise entre 550 nm et 630 nm, et dont le rendement quantique de fluorescence dans un solvant apolaire est compris entre 0,5 et 1. Le fluorophore secondaire peut alors être choisi parmi le rouge de Nil (« Nile red »), la rhodamine B ou un de ses sels, le 4-(dicyanométhylène)-2-méthyl-6-(4-diméthylaminostyryl)-4H-pyrane (DCM), le pyrrométhène 580, toute molécule de type N-alkyl ou N-alkyl ou N-aryl-pérylènediimide (comme par exemple le N,N'-bis(2,5-di-tert-butylphényl)-3,4,9,10-pérylènedicarboximide). Les structures moléculaires de ces fluorophores secondaires sont illustrées ci-après.

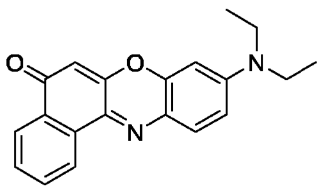

Nile red

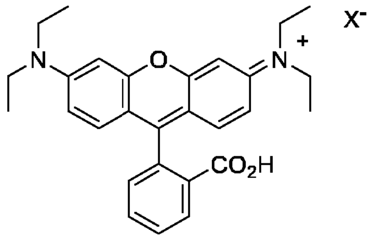

Rhodamine B

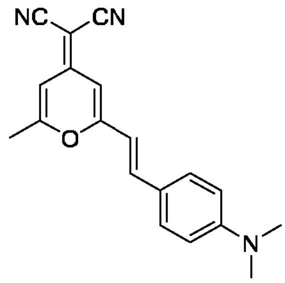

DCM

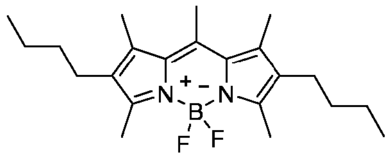

pyrrométhène 580

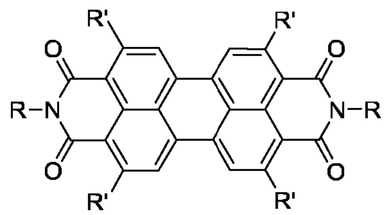

différents pérylène diimides

R = alkyle ou aryle
R' = alkyle, aryle, H, F, Cl, Br, I

L'invention concerne également un procédé de fabrication par polymérisation, via un milieu de polymérisation, du matériau hybride de l'invention pouvant être tel que défini dans la présente description, notamment selon une ou plusieurs des variantes décrites pour ce matériau.

Le procédé de fabrication d'un matériau hybride par polymérisation comprend les étapes successives suivantes :

a) disposer d'un milieu de polymérisation comprenant :

- des monomères, des oligomères ou leurs mélanges destinés à former au moins un polymère constitutif de la matrice polymérique pouvant être telle que définie dans la présente description, notamment selon une ou plusieurs des variantes décrites pour cette matrice polymérique ;
- un mélange fluorescent liquide comprenant en concentration molaire par rapport au nombre total de moles de fluorophore primaire dans le mélange fluorescent liquide i) 95,6 % à 99,1 % molaire d'un fluorophore primaire principal constitué de naphtalène et ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1, préférentiellement compris entre 0,5 et 1 ;

b) polymériser le milieu de polymérisation afin d'obtenir le matériau hybride.

Au cours de l'étape b) de polymérisation d'un précurseur du polymère (à savoir un précurseur tel que les monomères et/ou les oligomères précités), les fluorophores primaires principal et supplémentaire, ainsi que tout autre composé présent dans le milieu de polymérisation, sont généralement piégés et répartis de manière homogène dans la matrice polymérique en formation.

Dès lors, dans la présente description, le « mélange fluorescent liquide » est le mélange fluorescent comprenant le fluorophore primaire principal et le fluorophore primaire supplémentaire et qui est contenu dans le milieu de polymérisation avant de réaliser l'étape b).

Le « mélange fluorescent incorporé » désigne le mélange fluorescent comprenant le fluorophore primaire principal et le fluorophore primaire supplémentaire et qui est incorporé dans le matériau hybride après l'étape b) de polymérisation, par exemple par greffage ou dispersion.

Le « mélange fluorescent pour extrusion » désigne le mélange fluorescent comprenant le fluorophore primaire principal et le fluorophore primaire supplémentaire qui est contenu dans le mélange d'extrusion contenant par ailleurs des ingrédients polymérisés destinés à former une matrice polymérique.

Le milieu de polymérisation ne comprend généralement pas de solvant. Le procédé de fabrication est alors un procédé dit de « polymérisation en masse ».

Néanmoins, à titre optionnel, le milieu de polymérisation peut en outre comprendre un solvant de polymérisation. Le procédé de fabrication est alors généralement réalisé à reflux du solvant. Le solvant du milieu de polymérisation peut être choisi parmi le xylène, le chloroforme, le dichlorométhane, le chlorobenzène, le benzène, le tétrachlorométhane ou leurs mélanges.

Les monomères ou les oligomères peuvent comprendre au moins un groupe aromatique, (méth)acrylique ou vinylique. Au moins un monomère peut être choisi parmi le styrène, le vinyltoluène, le vinylxylène, le 1-vinylbiphényle, le 2-vinylbiphényle, le 1-vinylnaphtalène, le 2-vinylnaphtalène, vinylbiphényle, le 1-vinylnaphtalène, le 2-vinylnaphtalène, le 1-méthylnaphtalène, le N-vinylcarbazole, le (méth)acrylate de méthyle, l'acide (méth)acrylique ou le (méth)acrylate de 2-hydroxyéthyle.

Le milieu de polymérisation peut quant à lui comprendre 1 % massique à 25 % massique (voire 1 % massique à 5 % massique) du mélange fluorescent liquide.

Le mélange fluorescent liquide comprend i) 95,6 % à 99,1 % molaire du fluorophore primaire principal constitué de naphtalène et ii) 0,9 % à 4,4 % molaire du fluorophore primaire supplémentaire.

Le milieu de polymérisation peut en outre comprendre au moins une espèce chimique destinée à être incorporée au matériau hybride pour lui conférer ou améliorer des propriétés particulières (par exemple un fluorophore secondaire), et/ou au moins une espèce destinée à être consommée ou modifiée au cours de l'étape b) de polymérisation (par exemple un agent de réticulation, un initiateur de polymérisation).

Le milieu de polymérisation peut comprendre :

- un fluorophore secondaire, typiquement selon une concentration massique comprise entre 0,002 % et 0,5 % massique, voire 0,002 % massique à 0,2 % massique ; et/ou
- un agent de réticulation, typiquement selon une concentration massique comprise entre 0,1 % et 20 % (plus précisément 20,0 %) massique, voire 0,001 % massique à 1 % massique ; et/ou
- un initiateur de polymérisation, typiquement selon une concentration de 0,001 % massique à 1 % massique.
- un initiateur de polymérisation, typiquement selon une concentration de 0,001 % massique à 1 % massique.

Le fluorophore primaire supplémentaire, le fluorophore secondaire et/ou l'agent de réticulation peuvent également être tels que définis selon une ou plusieurs des variantes décrites dans la présente description.

La réaction de polymérisation selon l'étape b) peut être menée selon les conditions usuellement employées par l'homme du métier.

Ainsi, elle peut être démarrée avec un initiateur de polymérisation, notamment un photoinitiateur pour initier une polymérisation radicalaire. De préférence, le photoinitiateur n'est pas un photoinitiateur activable sous rayonnement UV, tel que par exemple le TPO. Un photoinitiateur UV peut produire des composés résiduels ou modifier d'autres composés du matériau de scintillation plastique, ce qui aboutit à un photoblanchiment de ce matériau préjudiciable à un bon rendement de scintillation.

De préférence, afin d'éviter au mieux un tel problème, le photoinitiateur utilisé dans l'invention est activable sous un rayonnement de lumière visible. Par exemple, comme indiqué dans la demande de brevet WO 2013076281 [référence 8], l'initiateur de polymérisation peut être choisi parmi un composé peroxyde (par exemple le peroxyde de benzoyle), un composé nitrile (par exemple l'azo(bis)isobutyronitrile (AIBN)) ou leurs mélanges.

Lorsque la réaction de polymérisation est réalisée notamment avec des monomères méthacrylates, elle peut être induite en chauffant le milieu de polymérisation à une température adaptée (généralement comprise entre 40 °C et 140 °C), ou en dopant le milieu de polymérisation par du 2,2-diméthoxy-2-phénylacétophénone en tant qu'initiateur de polymérisation puis en réalisant une irradiation sous UV (par exemple, à une longueur d'onde de 355 nm). La réaction de polymérisation en présence de monomères styréniques peut être induite thermiquement, typiquement par chauffage entre 40 °C et 140 °C.

Le procédé de fabrication du matériau hybride par polymérisation de l'invention peut être tel que, au cours de l'étape b) de polymérisation, le milieu de polymérisation est chauffé à une température de polymérisation comprise entre

100 °C et 140 °C (pendant une durée suffisante pour que la polymérisation soit complète, en général pendant 24 heures), puis refroidi selon une vitesse de 10 °C à 20 °C par jour (généralement pour atteindre la température ambiante, typiquement de 20 °C) jusqu'à obtention du matériau hybride.

Par exemple, le milieu de polymérisation peut être chauffé pendant 24 heures à 140 °C, puis refroidi selon une vitesse de 20 °C par jour jusqu'à revenir à 20 °C.

Les étapes a) et b) du procédé de fabrication par polymérisation via un milieu de polymérisation de l'invention peuvent être réalisées dans un moule afin d'obtenir une pièce telle que définie dans la présente description, ou une ébauche de cette pièce.

Le procédé de fabrication de l'invention par polymérisation via un milieu de polymérisation peut comprendre en outre une étape c) au cours de laquelle le matériau hybride ou l'ébauche de la pièce est usinée afin d'obtenir la pièce telle que définie dans la présente description. Cette étape d'usinage consiste par exemple à rectifier les faces (par exemple au tour), puis à les polir.

L'invention concerne également un matériau hybride obtenu ou susceptible d'être obtenu par le procédé de fabrication par polymérisation d'un matériau hybride via un milieu de polymérisation, notamment selon une ou plusieurs des variantes décrites pour ce procédé.

L'invention concerne également une pièce pour la détection par scintillation plastique comprenant un matériau hybride pouvant être tel que défini selon une ou plusieurs des variantes décrites dans la présente description pour ce matériau.

De manière générale, la pièce pour la détection par scintillation plastique est ainsi composée en tout ou partie d'un matériau hybride comprenant :

- une matrice polymérique ; et,
- un mélange fluorescent incorporé dans la matrice polymérique et comprenant en concentration molaire par rapport au nombre total de moles de fluorophore primaire dans le mélange fluorescent incorporé i) 95,6 % à 99,1 % molaire d'un fluorophore primaire principal constitué de naphtalène et ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm (voire entre 355 nm et 365 nm), la constante de décroissance de fluorescence est comprise entre 1 ns et 10 ns, et le rendement quantique de fluorescence dans un solvant apolaire est compris entre 0,2 et 1 (voire entre 0,5 et 1).

Cette pièce peut être une unité (telle que par exemple une fibre optique) ou une sous-unité d'un dispositif pour la détection par scintillation plastique (par exemple le compartiment hybride d'un détecteur de type phoswich).

La matrice polymérique du matériau hybride composant tout ou partie de la pièce peut être composée en totalité ou en partie d'au moins un polymère comprenant des unités répétitives issues de la polymérisation de monomères comprenant au moins un groupe aromatique, (méth)acrylique ou vinylique et/ou elle peut être constituée en totalité ou en partie d'au moins un polymère réticulé.

Au moins un monomère destiné à former la matrice polymérique est choisi parmi le styrène, le vinyltoluène, le vinylxylène, le 1-vinylbiphényle, le 2-vinylbiphényle, le 1-vinylnaphtalène, le 2-vinylnaphtalène, le 1-méthylnaphtalène, le N-vinylcarbazole, le (méth)acrylate de méthyle, l'acide (méth)acrylique ou le (méth)acrylate de 2-hydroxyéthyle. De préférence, le monomère est le styrène ou le vinyltoluène.

La pièce pour la détection par scintillation plastique de l'invention peut se présenter selon les variantes suivantes, éventuellement combinées :

- le matériau hybride comprend 1 % massique à 25 % massique (voire 1 % massique à 5 % massique) du mélange fluorescent incorporé, et/ou ;
- le mélange fluorescent incorporé comprend 95,6 % à 99,1 % molaire du fluorophore primaire principal constitué de naphtalène et ii) 0,9 % à 4,4 % molaire du fluorophore primaire supplémentaire.
- le fluorophore primaire supplémentaire est lié de manière covalente à la matrice polymérique, et/ou ;
- le fluorophore primaire supplémentaire est choisi parmi le 2,5-diphényloxazole (PPO), le [*para*]-terphényle (pTP), le *[meta]*-terphényle (mTP), le biphényle, le 2-phényl-5-(4-biphényl)-1,3,4-oxadiazole (PBD), le 2-(4'-t-butylphényl)-5-(4"-biphénylyl)-1,3,4-oxiadiazole (Butyl-PBD), l'anthracène, le [*para*]-quaterphényle, le tétraphénylbutadiène, le *N*-éthylcarbazole, le *N*-(2-éthylhexyl)carbazole, le 4-isopropylbiphényle, le [*para*]-sexiphényle, le 1-vinylbiphényle, le 2-vinylbiphényle, le 1-vinylnaphtalène, le 2-vinylnaphtalène, le 1-méthylnaphtalène, le *N*-vinylcarbazole, le méthacrylate de 9-anthracényle ou leurs mélanges ; le fluorophore primaire supplémentaire étant de préférence le 2,5-diphényloxazole (PPO), le [*para*]-terphényle (pTP), voire le *[meta]*-terphényle (mTP) ou leurs mélanges.

Le mélange fluorescent incorporé du matériau hybride de la pièce peut comprendre en outre un fluorophore secondaire, par exemple à une concentration massique par rapport à la masse du matériau hybride qui est comprise

entre 0,002 % et 0,5 % massique, voire 0,01 % massique à 0,2 % massique du fluorophore secondaire.

Le fluorophore primaire peut être choisi parmi le 1,4-di[2(5-phényloxazolyl)]benzène, le I,4-bis-(2-méthylstyryl)-benzène, le 1,4-bis(4-méthyl-5-phényl-2-oxazolyl)benzène, le 9,10-diphénylanthracène ou leurs mélanges.

Selon un premier mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 405 nm et 460 nm, et dont le rendement quantique de fluorescence dans un solvant apolaire est compris entre 0,5 et 1.

Dans ce cas, le fluorophore secondaire peut être choisi parmi le 1,4-bis(5-phenyl-2-oxazolyl)benzène (POPOP), le 1,4-bis(4-methyl-5-phenyl-2-oxazolyl)benzène (diméthylPOPOP), le bis-méthylstyrylbenzène (bis-MSB), le 9,10-diphénylanthracène (9,10-DPA) ou leurs mélanges.

Selon un deuxième mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 460 nm et 550 nm, et dont le rendement quantique de fluorescence dans un solvant apolaire est compris entre 0,5 et 1.

Dans ce cas, le fluorophore secondaire peut être choisi parmi la coumarine 6, la coumarine 7, la coumarine 30, la coumarine 102, la coumarine 151 la coumarine 314, la coumarine 334, la 3-hydroxyflavone ou leurs mélanges.

Selon un troisième mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 550 nm et 630 nm, et dont le rendement quantique de fluorescence dans un solvant apolaire est compris entre 0,5 et 1.

Dans ce cas, le fluorophore secondaire peut être choisi parmi le rouge de Nil, la rhodamine B ou un de ses sels, le 4-(Dicyanométhylène)-2-méthyl-6-(4-diméthylaminostyryl)-4*H*-pyrane, le pyrrométhène 580, ou un *N*-alkyl ou *N*-aryl-pérylènediimide.

De par la possibilité de varier la proportion relative entre le fluorophore primaire principal et le fluorophore primaire supplémentaire, le matériau hybride (et donc la pièce pour la détection par scintillation plastique) peut avoir une constante de décroissance de fluorescence comprise entre 10 ns et 90 ns (voire entre 15 ns et 80 ns) ; particulièrement entre 25 ns et 75 ns, plus particulièrement entre 28 ns et 70 ns.

La pièce peut avoir une grande variété de formes, par exemple une forme parallélépipédique ou cylindrique.

La pièce de forme parallélépipédique est par exemple un compartiment scintillateur plastique apte à être incorporé dans un dispositif pour la détection par scintillation plastique.

Lorsque la pièce a une forme cylindrique, et entre par exemple dans la composition d'un pilier de scintillateur plastique, elle peut avoir une section carrée ou rectangulaire.

Lorsque la pièce de forme cylindrique est par exemple une fibre optique scintillante (auquel cas le matériau hybride comprend une matrice polymérique constituée en totalité ou en partie d'au moins un polymère qui n'est pas réticulé), elle peut avoir une section circulaire, elliptique ou hexagonale.

Une fibre optique est un guide d'onde qui exploite les propriétés réfractrices de la lumière. Elle est habituellement constituée d'un coeur entouré d'une gaine. Le coeur de la fibre a un indice de réfraction légèrement plus élevé (différence de quelques millièmes) que la gaine. La lumière se trouve donc entièrement réfléchie de multiples fois à l'interface entre le matériau de la fibre interne constituant le coeur est le matériau de gainage par réflexion totale interne.

La fibre optique scintillante en tant que pièce de l'invention 10 peut comprendre une fibre polymère 11 composée en tout ou partie du matériau hybride et pourvue ou non d'une gaine 12 recouvrant la fibre polymère et composée en tout ou partie d'un matériau de gainage pour fibre optique dont l'indice de réfraction est inférieur à celui du matériau hybride, le matériau hybride comprenant une matrice polymérique constituée en totalité ou en partie d'au moins un polymère qui n'est pas réticulé.

Plusieurs fibres optiques scintillantes peuvent être réunies en faisceau de fibres.

La présence d'une gaine n'est pas obligatoire. Par exemple, lorsque la pièce a pour but de détecter une particule alpha, la fibre optique scintillante est composée uniquement d'une fibre interne polymère dépourvue de gaine pour éviter que l'énergie du rayonnement incident soit majoritairement absorbée par la gaine.

Néanmoins, le plus souvent, la fibre optique scintillante comprend une gaine dont le matériau de gainage est un matériau usuellement utilisé pour une fibre optique, en particulier scintillante. Par exemple, le matériau de gainage est choisi parmi le poly(méthacrylate de méthyle), le poly(méthacrylate de benzyle), le poly(méthacrylate de trifluorométhyle), le poly(méthacrylate de trifluoroéthyle) ou leurs mélanges.

L'invention concerne également un procédé de fabrication par extrusion d'une pièce pour la détection par scintillation plastique et composée en tout ou partie d'un matériau hybride, la pièce pouvant être telle que définie selon une ou plusieurs des variantes décrites dans la présente description, le procédé comprenant les étapes successives suivantes :

a') disposer d'un mélange d'extrusion comprenant :

- des ingrédients polymérisés destinés à former une matrice polymérique telle que définie dans la présente description, notamment selon une ou plusieurs des variantes décrites, à l'exception du cas où la matrice polymérique est constituée en totalité ou en partie (de préférence plus de 10 % en masse de polymère dans la matrice polymérique) d'au moins un polymère réticulé ;

  - un mélange fluorescent pour extrusion comprenant en concentration molaire par rapport au nombre total de moles de fluorophore primaire dans le mélange fluorescent pour extrusion :

    i) 95,6 % à 99,1 % molaire d'un fluorophore primaire principal constitué de naphtalène ; et
    ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 ;

b') sous une atmosphère d'extrusion à une température d'extrusion comprise entre 170 °C et 200 °C, extruder le mélange d'extrusion au travers d'une filière afin d'obtenir la pièce composée en tout ou partie d'un matériau hybride.

Un procédé de fabrication par extrusion est essentiellement un procédé de transformation d'ingrédients polymérisés qui, une fois ramollis ou en état de fusion grâce à la chaleur, sont poussés en continu à travers une filière qui donne sa géométrie au profilé à base de polymère obtenu à l'issue du procédé. Le procédé d'extrusion est bien connu de l'homme du métier : il est décrit par exemple dans le document « Techniques de l'ingénieur, Extrusion - extrusion monovis (partie 1), Référence AM3650, publication de 2002 » [référence 9].

Les ingrédients polymérisés pouvant être utilisés sont formés à partir d'un ou plusieurs polymères qui présentent une stabilité thermique telle que le polymère ne soit pas dégradé à la température requise pour l'extrusion, qui dépend de la température de transition vitreuse. Leur composition chimique est identique à celle de la matrice polymérique.

Les ingrédients polymérisés sont généralement sous forme solide, en particulier sous forme de granulés.

L'étape b') d'extrusion peut être réalisée au moyen d'une extrudeuse (par exemple une extrudeuse de type monovis, bivis, ou multivis) ou d'un comalaxeur. Typiquement, la filière est positionnée à la sortie de l'extrudeuse.

L'atmosphère d'extrusion peut être chimiquement inerte vis-à-vis du mélange d'extrusion. Une telle atmosphère limite ou évite l'oxydation de la matrice polymérique obtenue. Elle comprend par exemple de l'azote ou un gaz rare, tel que par exemple l'argon.

Typiquement, le procédé d'extrusion de l'invention est réalisé à une température d'extrusion inférieure à 218 °C qui est la température d'évaporation du naphtalène à pression atmosphérique, mais à une température suffisamment élevée pour ramollir ou mettre en fusion les ingrédients polymérisés, par exemple à une température d'extrusion comprise entre 170 °C et 200 °C.

L'étape b') d'extrusion peut être réalisée au moyen d'une extrudeuse (par exemple de type monovis, bivis ou multivis) ou d'un comalaxeur.

L'invention concerne également un procédé de fabrication par polymérisation d'une pièce pour la détection par scintillation plastique et composée en tout ou partie d'un matériau hybride, la pièce pouvant être telle que définie selon une ou plusieurs des variantes décrites dans la présente description, le procédé comprenant au moins une polymérisation via un milieu de polymérisation selon les étapes successives suivantes :

a) dans un premier moule, disposer d'un premier milieu de polymérisation comprenant :

- des monomères, des oligomères ou leurs mélanges destinés à former au moins un polymère constitutif d'une matrice polymérique telle que définie selon une ou plusieurs des variantes décrites dans la présente description (notamment le cas où la matrice polymérique est constituée en totalité ou en partie d'au moins un polymère réticulé ;
- un mélange fluorescent liquide comprenant en concentration molaire par rapport au nombre total de moles de fluorophore primaire dans le mélange fluorescent liquide :

  i) 95,6 % à 99,1 % molaire d'un fluorophore primaire principal constitué de naphtalène ; et
  ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 ;

b) polymériser le premier milieu de polymérisation afin d'obtenir directement la pièce ou une ébauche de la pièce qui est ensuite modifiée (par exemple usinée, notamment par étirage de l'ébauche) pour obtenir la pièce.

Dans le procédé de fabrication d'une pièce par polymérisation, le mélange fluorescent est liquide, car il est mélangé dans le premier milieu de polymérisation avec des monomères et/ou des oligomères.

Le volume interne du moule peut avoir une forme parallélépipédique ou cylindrique. La forme cylindrique peut être de section circulaire, elliptique, hexagonale, carrée ou rectangulaire.

Lorsque le volume interne du moule a une forme parallélépipédique, le procédé de fabrication par polymérisation peut de telle sorte que la pièce de forme parallélépipédique obtenue à l'issue de l'étape b) est un compartiment scintillateur plastique tel que défini dans la présente description et apte à être incorporé dans un dispositif pour la détection par scintillation plastique.

Dans ce cas, le compartiment scintillateur plastique de forme parallélépipédique peut être obtenu directement à l'issue du procédé de fabrication par polymérisation, après le cas échéant une étape optionnelle de rectification.

Lorsque le volume interne du moule a une forme cylindrique, le procédé de fabrication par polymérisation peut être de telle sorte que la pièce est une fibre optique scintillante 10 dépourvue de gaine pouvant être telle que définie dans la présente description selon une ou plusieurs de ses variantes, de telle sorte qu'un barreau cylindrique en tant qu'ébauche de la pièce est obtenu à l'issue de l'étape b), le procédé comprenant l'étape supplémentaire suivante réalisée après l'étape b) de polymérisation :

c) dans une tour de fibrage, ramollir par chauffage puis étirer l'ébauche de la pièce afin d'obtenir une fibre polymère 11 composée en tout ou partie du matériau hybride en tant que fibre optique scintillante 10 dépourvue de gaine.

Alternativement, lorsque le volume interne du moule a une forme cylindrique, le procédé de fabrication par polymérisation peut être de telle sorte que la pièce est une fibre optique scintillante 10 pourvue d'une gaine 12 pouvant être telle que définie dans la présente description selon une ou plusieurs de ses variantes, de telle sorte qu'un barreau cylindrique en tant que première ébauche de la pièce est obtenu à l'issue de l'étape b), le procédé comprenant l'étape supplémentaire suivante réalisée après l'étape b) :

- b1) placer la première ébauche de la pièce dans un deuxième moule cylindrique, puis remplir le volume libre délimité par la face interne du deuxième moule cylindrique et la face externe de la première ébauche de la pièce avec un deuxième milieu de polymérisation comprenant un précurseur d'un matériau de gainage pour fibre optique pour lequel l'indice de réfraction du matériau de gainage est inférieur à celui du matériau hybride ;
- b2) polymériser le deuxième milieu de polymérisation afin de former le matériau de gainage qui recouvre la première ébauche de la pièce, afin d'obtenir une deuxième ébauche de la pièce (constituant une préforme) ;

c) dans une tour de fibrage, ramollir par chauffage puis étirer la deuxième ébauche de la pièce afin d'obtenir, en tant que fibre optique scintillante 10 pourvue d'une gaine 12, une fibre polymère 11 composée en tout ou partie du matériau hybride et pourvue de la gaine 12 recouvrant la fibre polymère 11.

Dans ces deux alternatives, le volume interne du moule cylindrique a par exemple une section circulaire. Le moule peut alors avoir un diamètre interne compris entre 2 cm à 10 cm (typiquement 5 cm) et/ou une longueur longitudinale comprise entre 10 cm et 100 cm (typiquement 50 cm). Ces dimensions correspondent généralement à celles du barreau cylindrique en tant que préforme ou ébauche de la pièce.

Le précurseur du matériau de gainage est par exemple choisi parmi le méthacrylate de méthyle, le méthacrylate de benzyle, le méthacrylate de trifluorométhyle, le méthacrylate de trifluoroéthyle ou leurs mélanges.

L'ébauche de la pièce ou préforme est généralement placée verticalement sur la tour de fibrage. À l'issue de l'étape c), la fibre optique scintillante pourvue ou non d'une gaine est le plus souvent récupérée par tourage gravimétrique.

Au cours de l'étape de polymérisation b) et/ou b1), le premier milieu de polymérisation peut être chauffé à une température de première polymérisation comprise entre 100 °C et 140 °C (par exemple pendant une durée de 12 h à 24 h, notamment un jour à 140 °C), puis refroidi selon une baisse de la température de polymérisation de 10 °C à 20 °C par jour jusqu'à obtention de la pièce ou de l'ébauche de la pièce. Le refroidissement est généralement poursuivi jusqu'à atteindre la température ambiante de 20 °C.

Au cours de l'étape b2) de polymérisation, le deuxième milieu de polymérisation peut être chauffé à une température de deuxième polymérisation comprise entre 50 °C et 70 °C (par exemple pendant une durée de 8 à 10 jours, notamment 10 jours à 60 °C), puis refroidi selon une baisse de la température de polymérisation de 10 °C à 20 °C par jour jusqu'à obtention de la pièce ou de l'ébauche de la pièce. Le refroidissement est généralement poursuivi jusqu'à atteindre la température ambiante de 25 °C.

L'opération de chauffage pour ramollir peut quant à elle être réalisée au cours de l'étape c) à une température comprise entre 150 °C et 190 °C.

L'ébauche de la pièce peut être rectifiée juste avant de réaliser l'étape c) d'étirage. Par exemple, le barreau cylindrique est rectifié en coupant sa partie supérieure et inférieure sur une courte longueur. La face supérieure d'une

pièce sous forme parallélépipédique, à savoir la face qui se retrouve en contact léger avec l'air ambiant, peut également être rectifiée par découpage de la partie supérieure sur une courte longueur puis polissage.

À l'issue du procédé de fabrication de polymérisation, la fibre optique scintillante peut être telle que :

- le diamètre de la fibre polymère 11 est compris entre 50 μm et 1 mm, et/ou ;
- l'épaisseur de la gaine 12 est comprise entre 1 um et 20 μm, et/ou ;
- la longueur de la fibre optique scintillante est comprise entre 0,1 et 2 km.

Le premier milieu de polymérisation et/ou le deuxième milieu de polymérisation peut comprendre un solvant de polymérisation choisi par exemple parmi le xylène, le chloroforme, le dichlorométhane, le chlorobenzène, le benzène, le tétrachlorométhane ou leurs mélanges.

Concernant respectivement le procédé de fabrication d'une pièce par extrusion ou le procédé de fabrication d'une pièce par polymérisation, le mélange fluorescent pour extrusion ou le mélange fluorescent liquide (comprenant tous deux i) 95,6 % à 99,1 % molaire du fluorophore primaire principal constitué de naphtalène et donc ii) 0,9 % à 4,4 % molaire du fluorophore primaire supplémentaire) peut être tel que :

- le fluorophore primaire supplémentaire a un rendement quantique de fluorescence dans un solvant apolaire compris entre 0,5 et 1, et/ou ;
- il comprend un fluorophore secondaire tel que défini dans la présente description, notamment selon une ou plusieurs des variantes décrites.

L'invention concerne également un dispositif pour la détection par scintillation plastique comprenant une pièce pour la détection par scintillation plastique (pouvant être telle que définie selon une ou plusieurs des variantes décrites dans la présente description) en tant qu'élément scintillateur plastique hybride, la pièce étant de manière générale composée en tout ou partie d'un matériau hybride comprenant :

- une matrice polymérique ; et,
- un mélange fluorescent incorporé dans la matrice polymérique et comprenant en concentration molaire par rapport au nombre total de moles de fluorophore primaire dans le mélange fluorescent incorporé :

  i) 95,6 % à 99,1 % molaire d'un fluorophore primaire principal constitué de naphtalène ; et
  ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 (voire entre 0,5 et 1); la pièce étant couplée à un module d'acquisition électronique de telle sorte que le module est apte à collecter le rayonnement radioluminescent émis par la pièce lorsque cette dernière est mise en contact avec un rayonnement ionisant ou une particule ionisante.

La matrice polymérique du matériau hybride composant tout ou partie de la pièce peut être composée en totalité ou en partie d'au moins un polymère comprenant des unités répétitives issues de la polymérisation de monomères comprenant au moins un groupe aromatique, (méth)acrylique ou vinylique et/ou elle peut être constituée en totalité ou en partie d'au moins un polymère réticulé.

Au moins un monomère destiné à former la matrice polymérique peut être choisi parmi le styrène, le vinyltoluène, le vinylxylène, le 1-vinylbiphényle, le 2-vinylbiphényle, le 1-vinylnaphtalène, le 2-vinylnaphtalène, le 1-méthylnaphtalène, le N-vinylcarbazole, le (méth)acrylate de méthyle, l'acide (méth)acrylique ou le (méth)acrylate de 2-hydroxyéthyle. De préférence, le monomère est le styrène ou le vinyltoluène.

Le matériau hybride composant tout ou partie de la pièce intégrée dans le dispositif pour la détection par scintillation plastique de l'invention peut se présenter selon les variantes suivantes, éventuellement combinées :

- le matériau hybride comprend 1 % massique à 25 % massique (voire 1 % massique à 5 % massique) du mélange fluorescent incorporé, et/ou ;
- le fluorophore primaire supplémentaire est lié de manière covalente à la matrice polymérique, et/ou ;
- le fluorophore primaire supplémentaire est choisi parmi le 2,5-diphényloxazole (PPO), le [*para*]-terphényle (pTP), le *[meta]*-terphényle (mTP), le biphényle, le 2-phényl-5-(4-biphényl)-1,3,4-oxadiazole (PBD), le 2-(4'-*t*-butylphényl)-5-(4"-biphénylyl)-1,3,4-oxiadiazole (Butyl-PBD), l'anthracène, le [*para*]-quaterphényle, le tétraphénylbutadiène, le *N*-éthylcarbazole, le *N*-(2-éthylhexyl)carbazole, le 4-isopropylbiphényle, le [*para*]-sexiphényle, le 1-vinylbiphényle, le 2-vinylbiphényle, le 1-vinylnaphtalène, le 2-vinylnaphtalène, le 1-méthylnaphtalène, le *N*-vinylcarbazole, le méthacrylate de 9-anthracényle ou leurs mélanges ; le fluorophore primaire supplémentaire étant de préférence le 2,5-diphényloxazole (PPO), le [*para*]-terphényle (pTP), voire le *[meta]*-terphényle (mTP) ou leurs mélanges.

Le mélange fluorescent incorporé du matériau hybride de la pièce peut comprendre en outre un fluorophore secondaire, par exemple à une concentration massique par rapport à la masse du matériau hybride qui est comprise entre 0,002 % et 0,5 % massique, voire 0,01 % massique à 0,2 % massique du fluorophore secondaire.

Le fluorophore primaire peut être choisi parmi le 1,4-di[2(5-phényloxazolyl)]benzène, le l,4-bis-(2-méthylstyryl)-benzène, le 1,4-bis(4-méthyl-5-phényl-2-oxazolyl)benzène, le 9,10-diphénylanthracène ou leurs mélanges.

Selon un premier mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 405 nm et 460 nm, et dont le rapport à la masse du matériau hybride qui est comprise entre 0,002 % et 0,5 % massique, voire 0,01 % massique à 0,2 % massique du fluorophore secondaire.

Le fluorophore primaire peut être choisi parmi le 1,4-di[2(5-phényloxazolyl)]benzène, le l,4-bis-(2-méthylstyryl)-benzène, le 1,4-bis(4-méthyl-5-phényl-2-oxazolyl)benzène, le 9,10-diphénylanthracène ou leurs mélanges.

Selon un premier mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 405 nm et 460 nm, et dont le rendement quantique de fluorescence dans un solvant apolaire est compris entre 0,5 et 1.

Dans ce cas, le fluorophore secondaire peut être choisi parmi le 1,4-bis(5-phenyl-2-oxazolyl)benzène (POPOP), le 1,4-bis(4-methyl-5-phenyl-2-oxazolyl)benzène (diméthylPOPOP), le bis-méthylstyrylbenzène (bis-MSB), le 9,10-diphénylanthracène (9,10-DPA) ou leurs mélanges.

Selon un deuxième mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 460 nm et 550 nm, et dont le rendement quantique de fluorescence dans un solvant apolaire est compris entre 0,5 et 1.

Dans ce cas, le fluorophore secondaire peut être choisi parmi la coumarine 6, la coumarine 7, la coumarine 30, la coumarine 102, la coumarine 151 la coumarine 314, la coumarine 334, la 3-hydroxyflavone ou leurs mélanges.

Selon un troisième mode de réalisation, le fluorophore secondaire a un spectre d'absorption lumineuse et un spectre d'émission de fluorescence dont le centroïde est respectivement à une longueur d'onde comprise entre 330 nm et 380 nm et comprise entre 550 nm et 630 nm, et dont le rendement quantique de fluorescence dans un solvant apolaire est compris entre 0,5 et 1.

Dans ce cas, le fluorophore secondaire peut être choisi parmi le rouge de Nil, la rhodamine B ou un de ses sels, le 4-(Dicyanométhylène)-2-méthyl-6-(4-diméthylaminostyryl)-4*H*-pyrane, le pyrrométhène 580, ou un *N*-alkyl ou *N*-aryl-pérylènediimide.

De par la possibilité de varier la proportion relative entre le fluorophore primaire principal et le fluorophore primaire supplémentaire, le matériau hybride (et donc la pièce pour la détection par scintillation plastique et le dispositif qui l'intègre) peut avoir une constante de décroissance de fluorescence comprise entre 10 ns et 90 ns (voire entre 15 ns et 80 ns) ; particulièrement entre 25 ns et 75 ns, plus particulièrement entre 28 ns et 70 ns.

La pièce du dispositif peut avoir une grande variété de formes, par exemple une forme parallélépipédique ou cylindrique.

La pièce de forme parallélépipédique est par exemple un compartiment scintillateur plastique apte à être incorporé dans un dispositif pour la détection par scintillation plastique.

Lorsque la pièce a une forme cylindrique, et entre par exemple dans la composition d'un pilier de scintillateur plastique, elle peut avoir une section carrée ou rectangulaire.

Lorsque la pièce de forme cylindrique est par exemple une fibre optique scintillante (auquel cas le matériau hybride comprend une matrice polymérique constituée en totalité ou en partie d'au moins un polymère qui n'est pas réticulé), elle peut avoir une section circulaire, elliptique ou hexagonale.

La fibre optique scintillante en tant que pièce de l'invention 10 peut comprendre une fibre polymère 11 composée en tout ou partie du matériau hybride et pourvue ou non d'une gaine 12 recouvrant la fibre polymère et composée en tout ou partie d'un matériau de gainage pour fibre optique dont l'indice de réfraction est inférieur à celui du matériau hybride, le matériau hybride comprenant une matrice polymérique constituée en totalité ou en partie d'au moins un polymère qui n'est pas réticulé.

Plusieurs fibres optiques scintillantes peuvent être réunies en faisceau de fibres.

La présence d'une gaine n'est pas obligatoire. Par exemple, lorsque la pièce a pour but de détecter une particule alpha, la fibre optique scintillante est composée uniquement d'une fibre interne polymère dépourvue de gaine pour éviter que l'énergie du rayonnement incident soit majoritairement absorbée par la gaine.

Néanmoins, le plus souvent, la fibre optique scintillante comprend une gaine dont le matériau de gainage est un matériau usuellement utilisé pour une fibre optique, en particulier scintillante. Par exemple, le matériau de gainage

est choisi parmi le poly(méthacrylate de méthyle), le poly(méthacrylate de benzyle), le poly(méthacrylate de trifluorométhyle), le poly(méthacrylate de trifluoroéthyle) ou leurs mélanges.

Le couplage entre la pièce en tant qu'élément scintillateur plastique et le module d'acquisition est généralement réalisé par mise en contact du module d'acquisition avec une portion de la pièce à partir de laquelle le rayonnement radioluminescent émerge de la pièce.

Selon un premier mode de réalisation, le dispositif pour la détection par scintillation plastique, est tel que l'élément scintillateur plastique hybride est un premier élément scintillateur plastique hybride 1, le dispositif comprenant en outre un second élément scintillateur plastique rapide 2 dont la constante de décroissance de fluorescence est inférieure à celle du premier élément scintillateur plastique hybride 1, ces éléments scintillateur plastiques 1 et 2 formant un ensemble scintillateur plastique. Le premier élément scintillateur plastique hybride 1 est de préférence composé en tout ou partie d'un matériau hybride dont la constante de décroissance de fluorescence est comprise dans une des gammes précitées pour le matériau hybride (par exemple entre 10 ns et 90 ns, voire comprise entre 15 ns et 80 ns, avantageusement comprise entre 30 ns et 80 ns, particulièrement entre 70 ns et 80 ns ; ou entre 25 ns et 75 ns voire entre 28 ns et 70 ns lorsque la concentration molaire du fluorophore primaire principal constitué de naphtalène est comprise entre 95,6 % et 99,1 %. Le dispositif est préférentiellement un dispositif de type phoswich, dans lequel, par exemple, chaque élément scintillateur plastique est un compartiment scintillateur plastique.

L'invention décrite ne se limite toutefois pas à l'incorporation du matériau hybride dans un détecteur de scintillation plastique de type phoswich. Elle trouve un intérêt dès lors que l'homme du métier a besoin d'un scintillateur plastique avec une constante de décroissance de fluorescence déterminée et optimisée.

Le premier élément scintillateur plastique hybride 1 peut être en contact direct avec le second élément scintillateur plastique rapide 2.

Selon une autre alternative, le premier élément scintillateur plastique hybride 1 est en contact avec le second élément scintillateur plastique rapide 2 par l'intermédiaire d'une couche de liaison 5. L'ensemble scintillateur plastique comprend donc en outre une couche de liaison.

Dans le cas où les éléments scintillateur plastique sont de forme parallélépipédique, le premier élément scintillateur plastique hybride et le second élément scintillateur plastique rapide sont typiquement en contact l'un avec l'autre via une de leurs faces, de préférence leur face de plus grande surface ou de surface identique.

Dans le cas où les éléments scintillateur plastique sont de forme cylindrique, le premier élément scintillateur plastique hybride et le second élément scintillateur plastique rapide sont typiquement en contact l'un avec l'autre via leurs faces circulaires, qui sont généralement de surfaces identiques à l'endroit de leur contact.

En prenant pour référence le sens de propagation du rayonnement ionisant ou de la particule ionisante vis-à-vis du dispositif pour la détection par scintillation plastique, le premier élément scintillateur plastique hybride peut être indifféremment l'élément scintillateur plastique en amont ou l'élément scintillateur plastique en aval, auquel cas le second élément scintillateur plastique rapide est respectivement l'élément scintillateur plastique en aval ou en amont.

Par référence au sens de propagation du rayonnement ionisant ou de la particule ionisante vis-à-vis du dispositif, le premier élément scintillateur plastique hybride 1 est de préférence l'élément scintillateur plastique amont et le second élément scintillateur plastique rapide 2 est l'élément scintillateur plastique en aval.

Les éléments scintillateur plastique 1 et 2 peuvent avoir des épaisseurs différentes, de telle sorte que le dispositif comprend un élément scintillateur plastique fin et un élément scintillateur rapide épais. Les deux configurations sont donc possibles : le premier élément scintillateur plastique hybride peut être l'élément scintillateur plastique fin ou l'élément scintillateur plastique épais.

De préférence, l'épaisseur du premier élément scintillateur plastique hybride est inférieure à celle du second élément scintillateur plastique rapide. Ainsi, selon un mode de réalisation préférentiel de l'invention en vue de favoriser la discrimination bêta/gamma, le dispositif peut comprendre un premier élément scintillateur plastique hybride 1 fin et un second élément scintillateur plastique rapide 2 épais. De préférence, le dispositif comprend alors le premier élément scintillateur plastique hybride 1 fin en amont et le second élément scintillateur plastique rapide 2 épais en aval, par référence au sens R de propagation du rayonnement ionisant ou de la particule ionisante vis-à-vis du dispositif.

L'élément scintillateur plastique fin peut avoir une épaisseur de 10 $\mu$m à 1 mm, par exemple de 50 $\mu$m à 1 mm, de préférence de 100 $\mu$m à 500 $\mu$m ; et l'élément scintillateur plastique épais peut avoir une épaisseur allant de 1 mm à plusieurs centimètres, par exemple de 1 mm à 10 cm, de préférence de 3 mm à 5 cm.

Le second élément scintillateur plastique rapide 2 peut avoir une constante de décroissance de fluorescence comprise entre 1 ns et 7 ns.

Le second élément scintillateur plastique rapide 2 peut comprendre une matrice polymérique pouvant être telle que définie dans la présente description, notamment selon une ou plusieurs des variantes décrites pour cette matrice polymérique, et/ou un fluorophore primaire rapide choisi parmi le 2,5-diphényloxazole (PPO), le [*para*]-terphényle (pTP), le *[meta]*-terphényle (mTP), le biphényle, le 2-phényl-5-(4-biphényl)-1,3,4-oxadiazole (PBD), le 2-(4'-*t*-butylphényl)-5-(4"-biphénylyl)-1,3,4-oxadiazole (butyl-PBD), l'anthracène ou leurs mélanges. De préférence, le fluorophore primaire rapide est le 2,5-diphényloxazole (PPO), le [*para*]-terphényle (pTP), voire le *[meta]*-terphényle (mTP) ou leurs mélanges.

Le second élément scintillateur plastique rapide 2 peut comprendre un fluorophore secondaire pouvant être tel que défini dans la présente description, notamment selon une ou plusieurs des variantes décrites.

Selon un deuxième mode de réalisation, le dispositif pour la détection par scintillation plastique selon l'invention peut comprendre un unique élément scintillateur plastique hybride (dispositif de scintillation plastique dit « à compartiment unique »). Un tel dispositif à compartiment unique est avantageux lorsqu'il est couplé à un module électronique d'acquisition dont la fréquence d'échantillonnage est inférieure à 250 MHz : conformément au théorème de Niquist-Shannon, une impulsion longue telle qu'obtenue avec un unique scintillateur plastique hybride est mieux décrite avec un tel module d'acquisition pour lequel l'électronique est limitée en nombre de points par nanosecondes.

De manière générale, quel que soit le mode de réalisation, la pièce peut être couplée au module d'acquisition électronique par une couche d'interface optique 6, à savoir par couplage optique.

La couche d'interface optique a notamment pour propriétés de laisser passer le rayonnement sortant de l'élément scintillateur plastique, en particulier en position avale. Cette couche peut être composée en tout ou partie d'un matériau connu de l'homme de métier, par exemple choisi parmi les graisses, les colles, les gels, les ciments, les composés élastomères, les composés silicones ou leurs mélanges.

Le couplage entre la pièce et le module d'acquisition électronique peut être réalisé de manière directe ou indirecte via l'élément scintillateur plastique hybride.

Par exemple, ce couplage est généralement pour l'unique élément scintillateur plastique hybride.

Le couplage avec l'élément scintillateur plastique hybride est par contre indirect dans le cas du scintillateur phoswich : l'élément scintillateur plastique rapide aval vient s'interposer entre ces deux parties, et il est le seul à être en contact direct avec le module d'acquisition électronique.

Concernant le module d'acquisition électronique, il peut comprendre un photodétecteur 3, choisi par exemple parmi un photomultiplicateur, une photodiode, une caméra à transfert de charge CCD ou un capteur CMOS.

Le module d'acquisition électronique peut être placé en aval, par référence au sens de propagation du rayonnement ionisant ou de la particule ionisante vis-à-vis du dispositif, de la pièce en tant qu'élément scintillateur plastique hybride, de l'unique élément scintillateur plastique hybride, du premier élément scintillateur plastique hybride 1 ou du second élément scintillateur plastique rapide 2.

Il peut être étalonné en énergie grâce à des matières scintillantes standard.

L'invention concerne également un appareillage pour la détection par scintillation plastique comprenant un dispositif tel que défini dans la présente description selon une ou plusieurs de ses variantes, constitué par un appareil portatif pour la détection de rayonnement ionisant, un portique de détection ou un détecteur CCD (acronyme anglais pour «*Charge Coupled Device*»).

L'invention concerne également un procédé de fabrication d'un dispositif pour la détection par scintillation plastique tel que défini dans la présente description selon une ou plusieurs de ses variantes, dans lequel la pièce en tant qu'élément scintillateur plastique hybride est couplée (directement ou indirectement) au module d'acquisition électronique, de telle sorte que le module est apte à collecter le rayonnement radioluminescent émis par la pièce lorsque cette dernière est mise en contact avec un rayonnement ionisant ou une particule ionisante.

Le procédé de fabrication peut être tel que le dispositif comprend un ensemble scintillateur plastique, le procédé comprenant les étapes successives suivantes :

a") disposer d'un premier élément scintillateur plastique hybride 1 en tant que pièce et d'un second élément scintillateur plastique rapide 2 dont la constante de décroissance de fluorescence est inférieure à celle du premier élément scintillateur plastique hybride 1 ; chacun de ces éléments scintillateur plastiques ayant en outre une surface polie de même dimension que celle de l'autre élément scintillateur plastique ;

b") coupler, via leur surface polie, le premier élément scintillateur plastique hybride 1 et le second élément scintillateur plastique rapide 2 afin d'obtenir l'ensemble scintillateur plastique ;

c") coupler l'ensemble scintillateur plastique comprenant la pièce au module d'acquisition électronique, de telle sorte que le module est apte à collecter le rayonnement radioluminescent émis par l'ensemble scintillateur plastique lorsque ce dernier est mis en contact avec un rayonnement ionisant ou une particule ionisante.

Selon un premier mode de réalisation, le procédé de fabrication du dispositif est un procédé de couplage autogène par thermocollage : l'étape b") de liaison par couplage peut être réalisée par chauffage de la surface polie du premier élément scintillateur plastique hybride 1 et du second élément scintillateur plastique rapide 2 afin de ramollir ces surfaces qui sont ensuite pressées l'une contre l'autre afin de les coupler.

Selon un deuxième mode de réalisation, le procédé de fabrication du dispositif comprenant un ensemble scintillateur plastique est un procédé de couplage autogène moléculaire (à savoir autogène in situ), le procédé comprenant les étapes successives suivantes :

a‴) un élément scintillateur plastique, constitué par un premier élément scintillateur plastique hybride 1 en tant que

pièce ou par un second élément scintillateur plastique rapide 2 dont la constante de décroissance de fluorescence est inférieure à celle du premier élément scintillateur plastique hybride 1, est fabriqué in situ par polymérisation sur l'autre élément scintillateur plastique qui constitue un support de polymérisation, afin d'obtenir un ensemble scintillateur plastique à l'issue de l'étape a‴) ;

b‴) l'ensemble scintillateur plastique comprenant la pièce est couplé au module d'acquisition électronique, de telle sorte que le module est apte à collecter le rayonnement radioluminescent émis par l'ensemble scintillateur plastique lorsque ce dernier est mis en contact avec un rayonnement ionisant ou une particule ionisante.

Le couplage entre les éléments scintillateur plastiques 1 et 2 selon l'étape b"), et/ou le couplage selon lequel le module d'acquisition électronique est couplé avec l'ensemble scintillateur plastique selon l'étape c") ou l'étape b‴) ou avec l'unique élément scintillateur plastique hybride tel que défini dans la présente description selon une ou plusieurs de ses variantes, peut être réalisé au moyen d'une couche d'interface optique 6.

La couche d'interface optique 6 peut être un ciment optique (par exemple de type EJ-500), un solvant dit « de couplage » de couplage (généralement un alcool, tel que par exemple l'isopropanol ou le 1-butanol) ou de préférence une graisse optique (par exemple de type RTV141A).

Cette couche d'interface a généralement une épaisseur de 1 $\mu$m à 10 $\mu$m.

L'invention concerne également un procédé de mesure par scintillation plastique, le procédé comprenant les étapes successives suivantes :

i) un dispositif pour la détection par scintillation plastique tel que défini dans la présente description, notamment selon une ou plusieurs de ses variantes, est mis en contact avec un rayonnement ionisant ou une particule ionisante afin que la pièce (grâce au matériau hybride qu'elle contient) comprise dans le dispositif émette un rayonnement radioluminescent ; et

ii) le rayonnement radioluminescent est mesuré avec le module d'acquisition électronique du dispositif.

Préférentiellement, la durée de la décroissance du rayonnement radioluminescent mesurée est comprise entre 10 ns et 90 ns, encore plus préférentiellement entre 15 ns et 80 ns, encore plus préférentiellement entre 30 ns et 80 ns, particulièrement entre 25 ns et 75 ns, plus particulièrement entre 28 ns et 70 ns.

Le rayonnement ionisant ou la particule ionisante peut provenir d'une matière radioactive émettrice de rayons gamma, rayons X, particules bêta, particules alpha ou neutron. Le cas échéant, la matière radioactive peut émettre plusieurs types de rayonnements ionisants ou de particules ionisantes. Ainsi, avantageusement, une discrimination grâce à la forme des impulsions différentes entre les rayons gamma et les particules bêta peut être effectuée au cours de l'étape b) de mesure avec le procédé de mesure de scintillation de l'invention.

Le rayonnement radioluminescent qui résulte de cette exposition peut être mesuré selon l'étape ii) avec un photodétecteur, tel que par exemple un photodétecteur choisi parmi un photomultiplicateur, une photodiode, une caméra à transfert de charge (dite CCD pour «Charge-Coupled Device camera» en anglais), un capteur CMOS (pour «Complementary Metal-Oxide Semiconductor» en anglais), ou tout autre détecteur de photon dont la capture est convertie en signal électrique.

Selon un mode de réalisation préférentiel de l'invention, le procédé de mesure peut comprendre une étape iii) dans laquelle on détermine la présence et/ou la quantité de la matière radioactive à partir de la mesure du rayonnement radioluminescent selon l'étape ii), comme cela est pratiqué usuellement en scintillation plastique. À titre d'exemple, l'étape iii) de mesure qualitative et/ou quantitative est décrite en faisant l'analogie avec la scintillation plastique à partir du document «Techniques de l'ingénieur, Mesures de radioactivité par scintillation liquide, Référence p2552, publication du 10/03/2004» [référence 10].

La détermination quantitative peut notamment mesurer l'activité de la source radioactive. Elle peut être réalisée à partir d'une courbe d'étalonnage.

Cette courbe est par exemple telle que le nombre de photons provenant du rayonnement radioluminescent émis pour une matière radioactive connue est corrélé avec l'énergie du rayonnement incident pour cette matière radioactive. À partir de l'angle solide, de la distance entre la source radioactive et le scintillateur plastique, et de l'activité détectée par le procédé de mesure utilisant le scintillateur plastique de l'invention, il est alors possible de quantifier l'activité de la source radioactive.

Ne faisant pas l'objet de la protection demandée, une composition de polymérisation pour fabriquer un matériau hybride (tel que défini dans la présente description, selon une ou plusieurs de ses variantes) pour la détection par scintillation plastique comprend :

- des monomères, des oligomères ou leurs mélanges destinés à former au moins un polymère constitutif d'une matrice polymérique telle que définie dans la présente description selon une ou plusieurs des variantes ;
- un mélange fluorescent liquide comprenant en concentration molaire par rapport au nombre total de moles de

fluorophore primaire dans le mélange fluorescent liquide :

i) 95,6 % à 99,1 % molaire d'un fluorophore primaire principal constitué de naphtalène ; et
ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 (voire entre 0,5 et 1).

Les monomères, les oligomères ou leurs mélanges peuvent comprendre au moins un groupe aromatique, (méth)acrylique ou vinylique.
Le mélange fluorescent liquide peut comprendre un fluorophore secondaire, tel que défini dans la présente description, selon une ou plusieurs de ses variantes.
Ainsi, selon certaines de ces variantes, le fluorophore secondaire peut avoir :

- un spectre d'absorption lumineuse et un spectre d'émission de fluorescence dont le centroïde est respectivement à une longueur d'onde comprise entre 330 nm et 380 nm et comprise entre 405 nm et 460 nm, et dont le rendement quantique de fluorescence dans un solvant apolaire est compris entre 0,5 et 1, ou ;
- un spectre d'absorption lumineuse et un spectre d'émission de fluorescence dont le centroïde est respectivement à une longueur d'onde comprise entre 330 nm et 380 nm et comprise entre 460 nm et 550 nm, et dont le rendement quantique de fluorescence dans un solvant apolaire est compris entre 0,5 et 1, ou ;
- un spectre d'absorption lumineuse et un spectre d'émission de fluorescence dont le centroïde est respectivement à une longueur d'onde comprise entre 330 nm et 380 nm et comprise entre 550 nm et 630 nm, et dont le rendement quantique de fluorescence dans un solvant apolaire est compris entre 0,5 et 1, ou ;
- un spectre d'absorption lumineuse et un spectre d'émission de fluorescence dont le centroïde est respectivement à une longueur d'onde comprise entre 330 nm et 380 nm et comprise entre 550 nm et 630 nm, et dont le rendement quantique de fluorescence dans un solvant apolaire est compris entre 0,5 et 1.

Le fluorophore secondaire peut être à une concentration massique par rapport à la masse de la composition de polymérisation qui est comprise entre 0,002 % et 0,5 % massique.
La composition de polymérisation peut comprendre 1 % massique à 25 % massique du mélange fluorescent liquide.
Elle peut également en outre comprendre un solvant de polymérisation.
La composition de polymérisation peut être mise en oeuvre dans les procédés de fabrication du matériau hybride ou de la pièce tels qu'ils ont été décrits précédemment.
D'autres objets, caractéristiques et avantages de l'invention vont maintenant être précisés dans la description qui suit de modes de réalisation particuliers de l'invention, donnés à titre illustratif et non limitatif, en référence aux Figures 1 à 8 annexées.

## BREVE DESCRIPTION DES FIGURES

La Figure 1 représente un tableau dans lequel la constante de décroissance de fluorescence est mesurée pour des matériaux hybrides qui se différencient par la proportion entre le fluorophore primaire principal et le fluorophore primaire supplémentaire et par l'ajout éventuel d'un fluorophore secondaire, ainsi qu'à titre de comparaison pour un matériau ne contenant pas de fluorophore primaire supplémentaire.
La Figure 2A représente l'évolution de la constante de décroissance de fluorescence tau monoexponentielle médiane en fonction de la proportion molaire entre le fluorophore primaire principal et le fluorophore primaire supplémentaire selon les données de la Figure 1. Il peut représenter un abaque figurant dans une notice livrée avec un kit prêt à l'emploi.
À titre comparatif, la Figure 2B représente l'évolution de la constante de décroissance de fluorescence tau monoexponentielle médiane en fonction de la proportion molaire entre un fluorophore primaire principal différent de celui de l'invention et un fluorophore primaire supplémentaire.
La Figure 3 représente le profil d'impulsion pour différents scintillateurs plastiques, à savoir l'évolution de leurs réponses en nombre de coups/secondes en fonction du temps exprimé en nanosecondes. Un profil d'enregistrement des impulsions est superposé à ces profils.
La Figure 4 représente les spectres en énergie d'un scintillateur plastique de l'invention et d'un scintillateur plastique

lent commercial.

Les Figures 5 et 6 représentent une vue en coupe transversale d'un dispositif de type « phoswich » pour la détection par scintillation plastique selon l'invention, respectivement sans et avec couche de liaison.

La Figure 7 représente une variante du dispositif de la Figure 6.

La Figure 8 représente la vue schématique d'une fibre optique scintillante pourvue d'une gaine.

## EXPOSE DE MODES DE REALISATION PARTICULIERS

Sauf indication contraire, les exemples sont réalisés à pression atmosphérique et température ambiante.

### 1. Fabrication d'un matériau hybride pour la mesure par scintillation plastique selon l'invention.

#### 1.1. Exemple 1 de fabrication d'un scintillateur plastique avec fluorophore secondaire.

Un mélange liquide comprenant des molécules fluorescentes (5 % massique (3,624 g) de naphtalène en tant que fluorophore primaire principal + 0,2 % massique (183 mg) de 2,5-diphényloxazole (PPO) en tant que fluorophore primaire supplémentaire et 0,02 % massique (15,2 mg) de 9,10-diphénylanthracène (DPA) en tant que fluorophore secondaire) auquel est ensuite ajouté du styrène (80 mL soit 94,78 % massique) est introduit dans un ballon monocol préalablement séché sous atmosphère inerte d'argon.

Après cinq dégazages à froid sous vide (dite méthode «freeze-pump-thaw» en anglais), le milieu de polymérisation obtenu revenu à température ambiante est versé dans un moule apte à donner la forme finale au scintillateur plastique.

Après cinq jours de chauffage à 140 °C du moule scellé sous atmosphère inerte d'argon, le scintillateur plastique est démoulé, rectifié puis poli.

#### 1.2. Exemple 2 de fabrication d'un scintillateur plastique avec fluorophore secondaire.

Un mélange liquide comprenant des molécules fluorescentes (5 % massique de naphtalène (3,624 g) + 0,2 % massique de 2,5-diphényloxazole (PPO, 183 mg) en tant que fluorophores primaires et 0,02 % massique de 1,4-bis(4-méthyl-5-phényl-2-oxazolyl)benzène (diméthylPOPOP, 15,2 mg) en tant que fluorophore secondaire) auquel sont ensuite ajoutés du styrène (80 mL, 94,78 % massique) est introduit dans un ballon monocol préalablement séché sous atmosphère inerte d'argon.

Après cinq dégazages à froid sous vide, le milieu de polymérisation obtenu revenu à température ambiante est versé dans un moule.

Après cinq jours de chauffage à 140 °C du moule scellé sous atmosphère inerte d'argon, le scintillateur plastique est démoulé, rectifié puis poli.

#### 1.3. Exemple 3 de fabrication d'un scintillateur plastique avec matrice polymérique réticulée et fluorophore secondaire.

Un mélange liquide comprenant des molécules fluorescentes (5 % massique de naphtalène (3,624 g) + 0,2 % massique de 2,5-diphényloxazole (PPO, 183 mg) en tant que fluorophores primaires et 0,02 % massique de 9,10-diphénylanthracène (DPA, 15,2 mg) en tant que fluorophore secondaire) auquel sont ensuite ajoutés 80 % massique de styrène (64 mL) puis 14,78 % massique du diméthacrylate de 1,4-butanediyle (10,3 mL) en tant qu'agent de réticulation est introduit dans un ballon monocol préalablement séché sous atmosphère inerte d'argon.

Après cinq dégazages à froid sous vide, le milieu de polymérisation obtenu revenu à température ambiante est versé dans un moule.

Après dix jours de chauffage à 65 °C du moule scellé sous atmosphère inerte d'argon, le scintillateur plastique est démoulé, rectifié puis poli.

### 2. Fabrication d'une gamme de scintillateurs plastiques avec proportion variable entre les fluorophores primaires.

Des scintillateurs plastiques sont fabriqués selon les caractéristiques spécifiées dans le tableau de la Figure 1 selon un procédé de fabrication similaire à celui divulgué dans les exemples précédents.

Ils diffèrent par la composition chimique de la matrice polymérique (St = polystyrène ; St/1,4 = mélange de styrène et de diméthacrylate de 1,4-butanediyle polymérisés dans une proportion massique entre les deux monomères respectivement de 5 pour 1) et par le rapport molaire entre le fluorophore primaire principal (naphtalène) et le fluorophore

primaire supplémentaire (2,5-diphényloxazole = PPO). La concentration massique de chaque fluorophore primaire est indiquée en pourcentage par rapport à la masse totale du scintillateur plastique, le reste étant donc constitué par le pourcentage en masse de la matrice polymérique, de l'autre fluorophore primaire, ainsi que par une concentration constante de 0,02 % massique en 9,10-diphénylanthracène (9,10-DPA) ajouté en tant que fluorophore secondaire non indiqué dans le tableau de la Figure 1.

La constante de décroissance tau de la fluorescence est mesurée par comptage de photon unique résolu en temps tel que précédemment décrit. Elle est ici généralement obtenue par ajustement de type biexponentiel des valeurs obtenues, des facteurs de pondérations pour chaque composante exponentielle étant indiqués en pourcentage entre parenthèses. Afin de faciliter la comparaison entre les différents scintillateurs plastiques, le tau biexponentiel est converti en tau monoexponentiel médian conformément à l'équation ci-dessous pour lequel la qualité de l'ajustement de la mesure par rapport à l'impulsion lumineuse est évaluée par le khi carré qui doit être idéalement le plus proche de 1. Alternativement, les appareillages commerciaux de comptage de photon unique résolu en temps calculent automatiquement le taux monoexponentiel médian voire le taux biexponentiel à partir des données enregistrées.

La constante tau monoexponentielle de décroissance médiane de la fluorescence peut être calculée à partir de la formule suivante :

$$\tau_{médian} = \tau_{rapide} \times \%_{rapide} + \tau_{lent} \times \%_{lent}$$

Les pourcentages « % rapide » et « % lent » représentent les poids respectifs de la décroissance rapide et lente. Ils sont ajustés pour décrire au mieux la décroissance médiane. Leur somme est égale à 100 %.

Ainsi, la Figure 2A représente l'évolution de la constante de décroissance de fluorescence tau médian monoexponentielle (tau monoexponentiel médian) en fonction du ratio molaire naphtalène/PPO. Elle montre clairement l'évolution continue de la constante de décroissance de fluorescence en fonction du rapport molaire entre le fluorophore primaire principal et le fluorophore primaire supplémentaire. Cette évolution a pour forme une exponentielle décroissante qui est la signature d'une synergie entre le fluorophore primaire principal et le fluorophore primaire supplémentaire. En l'absence d'une telle synergie, l'évolution de la constante de temps en fonction du ratio molaire serait sous forme d'une droite linéaire qui relierait directement la valeur à 100 % et à 0 % traduisant le simple remplacement progressif d'un fluorophore primaire par un autre.

À titre comparatif, le fluorophore primaire principal selon la Figure 2A de la combinaison naphtalène/PPO selon l'invention a été remplacé par du pyrène, composé qui appartient à la famille des composés aromatiques condensés tout comme le naphtalène, comme le montre les structures moléculaires ci-dessous :

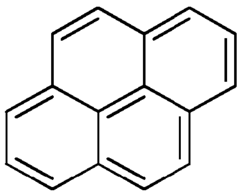
pyrène

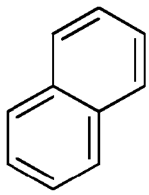
naphtalène

L'évolution de la constante de décroissance de fluorescence tau médian monoexponentielle (tau monoexponentiel médian) est étudiée en fonction du ratio molaire pyrène/PPO de manière similaire à l'étude de la Figure 2A. Le résultat est illustré par la Figure 2B qui montre que cette évolution n'a absolument pas la forme d'une exponentielle décroissante : il n'y a donc aucun effet de synergie entre le pyrène et le PPO, contrairement à la combinaison du fluorophore primaire principal et du fluorophore primaire supplémentaire selon l'invention.

Un autre avantage de l'utilisation d'un matériau hybride pour la mesure par scintillation plastique est démontré par la Figure 3 qui illustre le type d'impulsion de réponse obtenue pour un scintillateur plastique référencé par un indice sur la figure :

- rapide (indice a) : scintillateur de référence « Eljen EJ-200 » commercialisé par la société Eljen Technology ;
- lent (indice b): scintillateur de référence « Eljen EJ-240 » commercialisé par la société Eljen Technology ;
- hybride (indice c): comprenant le matériau hybride selon l'invention.

Le profil d'enregistrement utilisé (500 ns avec un bruit de 10 coups/secondes) est superposé aux impulsions

de ces trois scintillateurs plastiques.

La Figure 3 démontre les avantages d'un scintillateur plastique phoswich comprenant un compartiment rapide et un compartiment hybride selon l'invention par rapport à un scintillateur plastique phoswich comprenant un compartiment rapide et un compartiment lent : pour un bruit électronique par exemple estimé à 10 coups par seconde, l'impulsion hybride du compartiment hybride a un meilleur rapport signal-sur-bruit que l'impulsion lente du compartiment lent, grâce à l'amplitude supérieure de l'impulsion hybride.

L'acquisition est réalisée par l'ouverture d'une porte temporelle d'enregistrement de ces impulsions. Comme indiqué précédemment, la durée de cet enregistrement est généralement choisie pour être 6 à 10 fois supérieure à la constante de décroissance de fluorescence la plus élevée, cette constante de décroissance correspondant pour chaque impulsion à la largeur en abscisse de l'impulsion exprimée en nanosecondes. En cas de forts taux de comptage, comme par exemple lorsqu'une source radioactive de forte activité est mise en présence du dispositif phoswich, l'utilisation d'un compartiment lent implique donc d'utiliser une fenêtre d'enregistrement beaucoup plus longue : plusieurs impulsions peuvent alors coexister dans la même fenêtre temporelle (phénomène d'empilement), ce qui se traduit alors par des erreurs d'acquisition en absence de discrimination de ces impulsions.

Ces propriétés d'un compartiment hybride sont donc particulièrement avantageuses pour la discrimination de particule bêta dans un environnement de rayonnements gamma avec un dispositif « phoswich » comprenant un compartiment hybride (en particulier lorsqu'il est le compartiment d'épaisseur la plus faible) et un compartiment rapide, chacun de ces deux compartiments détectant respectivement la particule bêta et le rayonnement gamma.

## 3. Exemple de mesure qualitative ou quantitative d'une matière radioactive en scintillation plastique selon le procédé de mesure de l'invention.

### 3.1. Protocole de mesure.

Un scintillateur plastique comprenant le matériau hybride de l'invention dans lequel est incorporé un fluorophore secondaire est connecté au moyen de graisse optique à un tube photomultiplicateur qui remplit la fonction de photodétecteur d'un module d'acquisition électronique.

Suite à son exposition à la matière radioactive, le scintillateur plastique émet des photons de scintillation qui sont convertis en signal électrique par le tube photomultiplicateur alimenté en haute tension.

Le signal électrique est ensuite acquis puis analysé avec un oscilloscope, un logiciel de spectrométrie ou une carte électronique d'acquisition. Les données ainsi collectées sont ensuite traitées par ordinateur.

Cette analyse aboutit à un histogramme de spectre en énergie représentant en abscisse les canaux (dérivés d'une énergie de sortie) et en ordonnée le nombre de coups/secondes. Après étalonnage avec une source émettrice gamma d'énergie connue, l'énergie de la matière radioactive à mesurer est déterminée.

### 3.2. Mesure quantitative avec le scintillateur.

Sur la base de ce protocole de mesure, une mesure quantitative est réalisée avec une source radioactive bêta de chlore-36 d'activité sur 4 $\pi$ égale à 6 kBq. Cette source est placée sur la partie supérieure du scintillateur plastique.

Un scintillateur plastique cylindrique de section circulaire, de diamètre 49 mm et de hauteur 35 mm (référence F30B du tableau de la Figure 1) est couplé avec de la graisse optique Rhodorsil RTV141A à la photocathode d'un photomultiplicateur (modèle Hamamatsu H1949-51) alimenté par une haute tension (modèle Ortec 556). Le signal sortant du photomultiplicateur est récupéré puis numérisé par une carte électronique propre à l'inventeur. Cette carte peut être remplacée par une autre carte électronique équivalente (par exemple modèle CAEN DT5730B) ou un oscilloscope (par exemple modèle Lecroy Waverunner 640Zi).

Dans un premier temps, un étalonnage en énergie du système (scintillateur + photomultiplicateur) est réalisé au moyen de 2 sources radioactives : l'une émettant des rayons gamma dans la zone [0 - 200 keV] et l'autre dans la zone [500 - 1,3 MeV]. Cet étalonnage en énergie est réalisé en repérant le canal correspondant à 80 % de l'amplitude du front Compton. Par exemple, si l'ordonnée du front Compton correspond à 100 coups par seconde, l'abscisse sur la redescente du front Compton à 80 coups par seconde associe l'énergie du front Compton (en keV) au canal.

Dans un deuxième temps, cet étalonnage réalisé, la source bêta de chlore-36 est accolée à la face supérieure du scintillateur plastique. L'analyse du spectre en énergie donne une activité lue de 2,1 kBq (et donc une efficacité intrinsèque selon laquelle 70 % des rayonnements incidents sont mesurés) et un pic photoélectrique centré vers 250 keV.

Le spectre en énergie du scintillateur plastique hybride obtenu est représenté sur la Figure 4 (indice (c')). À titre comparatif, il est superposé à celui d'un scintillateur plastique lent ("Eljen EJ-240 slow" commercialisé par la société Eljen Technology - indice (b') sur la Figure 4) dont l'efficacité intrinsèque mesurée est de 54 %.

## 4. Géométries d'un dispositif pour la détection par scintillation plastique selon l'invention.

Un tel dispositif est décrit en référence aux Figures 5 et 6 qui représentent, selon un axe longitudinal en référence au rayonnement R, des coupes d'un scintillateur plastique de forme parallélépipédique de type « phoswich ». Ainsi, sauf indication contraire, chaque partie du dispositif ici représenté est de forme parallélépipédique. Les mêmes références numériques désignent les mêmes éléments sur ces deux figures.

### 4.1. Dispositif avec couche de liaison.

Selon un premier mode de réalisation illustrée par la Figure 5, le dispositif de détection par scintillation plastique D de l'invention comprend une pièce selon l'invention qui est un premier élément scintillateur plastique hybride 1 constitué en tout ou partie du matériau hybride de l'invention, et un second élément scintillateur plastique rapide 2. Ces éléments sont respectivement situés en amont et en aval par rapport au sens R de propagation du rayonnement incident (ou de la particule incidente) sur le scintillateur phoswich. Par convention, ils sont donc désignés dans la suite de la description par « scintillateur hybride amont 1 » et « scintillateur rapide aval 2 ». Dans la configuration illustrée par la Figure 5, le scintillateur hybride amont 1 est dit « fin », car il est d'épaisseur longitudinale plus faible que le scintillateur rapide aval 2 dit « épais ». Le dispositif pour la détection par scintillation plastique de l'invention présentant toutes ces caractéristiques montre une discrimination entre les rayons gamma et les particules bêta qui est améliorée.

Le scintillateur hybride amont 1 et le scintillateur rapide aval 2 sont éventuellement contenus dans une enveloppe 8 qui peut constituer le boîtier ou le bâti du dispositif. Ils sont fixés l'un à l'autre avec une couche d'interface optique formant une couche de liaison 5.

La couche de liaison 5 est généralement une couche distincte du scintillateur hybride amont 1 et du scintillateur rapide aval 2, par exemple une couche d'adjonction. Elle peut toutefois être une couche composée d'un matériau intermédiaire résultant de la fusion du matériau du scintillateur hybride amont 1 et du scintillateur rapide aval 2, comme pour les détecteurs à scintillation plastique comprenant deux scintillateurs liés l'un à l'autre par pressage thermomécanique.

La couche de liaison 5 peut être une couche optique qui est transparente au rayonnement luminescent. Elle peut être composée d'une matière de liaison choisie parmi les graisses, les colles, les gels, les ciments optiques, les composés élastomères, les composés silicones usuellement mis en oeuvre dans le domaine optique. Une telle matière laisse passer le rayonnement lumineux sortant du scintillateur aval.

Un photodétecteur 3 (tel que par exemple un photomultiplicateur) est fixé sur le scintillateur rapide aval 2 avec une couche d'interface optique 6. Il est apte à collecter le rayonnement radioluminescent résultant du contact d'une particule ionisante ou d'un rayonnement ionisant avec les scintillateurs 1 et 2.

La face du scintillateur hybride amont 1 qui reçoit en premier le rayonnement incident selon le sens de propagation R à détecter est recouverte d'une couche métallique 4 qui est ici fine. Cette couche métallique 4 constitue une fenêtre d'entrée avec laquelle le rayonnement incident (ou la particule incidente) entre en contact, tout en empêchant la lumière ambiante d'entrer également en contact avec le scintillateur amont en l'isolant de la lumière. Les faces latérales des scintillateurs amont et aval sont recouvertes d'un réflecteur ou diffuseur de lumière 7 composée d'une matière réfléchissante comprenant par exemple de l'aluminium (mylar aluminisé, papier aluminium, ...) ou composée d'une matière diffusante comprenant par exemple du téflon, une peinture à base d'oxyde de titane $Ti0_2$, une peinture à base d'oxyde de magnésium MgO, du papier-filtre Millipore.

### 4.2. Dispositif sans couche de liaison.

Selon un deuxième mode de réalisation illustré par la Figure 6, le dispositif de détection par scintillation plastique D de l'invention a une structure telle que décrite dans le document WO 2013076279 [référence 11]. Il ne comprend donc pas de couche de liaison telle que la couche d'interface optique 5 décrite à la Figure 5. Le dispositif pour la détection par scintillation plastique sans couche de liaison de l'invention diffère néanmoins de celui décrit dans la référence [8] par le fait qu'il comprend un premier élément scintillateur plastique hybride constitué en tout ou partie du matériau hybride de l'invention.

Le dispositif de détection par scintillation plastique D de l'invention sans couche de liaison illustré par la Figure 6 comprend un premier élément scintillateur plastique hybride 1 constitué en tout ou partie du matériau hybride de l'invention, et un second élément scintillateur plastique rapide 2. Ces éléments sont respectivement situés en amont et en aval par rapport au sens R de propagation du rayonnement incident (ou de la particule incidente) sur le scintillateur phoswich. Dans la configuration illustrée par la Figure 5, le scintillateur hybride amont 1 est dit « fin », car il est d'épaisseur longitudinale plus faible que le scintillateur rapide aval 2 dit « épais ». Le dispositif pour la détection par scintillation plastique de l'invention présentant toutes ces caractéristiques montre une discrimination entre les rayons gamma et les particules bêta qui est améliorée.

Le scintillateur hybride amont 1 et le scintillateur rapide aval 2 sont en contact direct et fixés l'un à l'autre par un procédé de couplage autogène. Dans ce procédé de couplage, un premier scintillateur plastique réticulé est préparé puis polymérisé. Après cette première formulation solide, la solution de monomères contenant le mélange fluorescent pour fabriquer le deuxième scintillateur est coulée sur le premier scintillateur, l'ensemble est ensuite mis à chauffer.
Les scintillateurs 1 et 2 sont éventuellement contenus dans une enveloppe 8 qui peut constituer le boîtier ou le bâti du dispositif.
Un photodétecteur 3 (tel que par exemple un photomultiplicateur) est fixé sur le scintillateur rapide aval 2 avec une couche d'interface optique 6. Il est apte à collecter le rayonnement radioluminescent résultant du contact d'une particule ionisante ou d'un rayonnement ionisant avec les scintillateurs 1 et 2.
La face du scintillateur hybride amont 1 qui reçoit en premier le rayonnement incident (ou la particule incidente) selon le sens de propagation R à détecter est recouverte d'une couche opaque à la lumière 9. Cette couche opaque 9 constitue une fenêtre d'entrée avec laquelle le rayonnement incident entre en contact, tout en limitant le contact de la lumière ambiante avec le scintillateur amont.
Les faces latérales des scintillateurs amont et aval sont recouvertes d'un réflecteur ou diffuseur de lumière 7. La couche opaque à la lumière 9 est perméable au passage des rayonnements bêta et gamma. Elle est composée d'une matière opaque telle que par exemple le Mylar.
Comme indiqué précédemment, le scintillateur hybride amont 1 peut avoir une épaisseur plus faible que le scintillateur rapide aval 2. Une telle configuration et représentée sur la Figure 7.

### 4.3. Fibre optique scintillante.

La Figure 8 représente une fibre optique scintillante 10 de section cylindrique. Elle comprend une fibre polymère 11 composée en tout ou partie du matériau hybride de l'invention. La fibre polymère 11 constituant le coeur interne de la fibre est recouverte d'une gaine 12 recouvrant la fibre polymère et composée en tout ou partie d'un matériau de gainage.
L'invention est applicable aux domaines où sont utilisés des scintillateurs, en particulier :

- dans le domaine industriel, par exemple pour la mesure de paramètres physiques de pièces en cours de fabrication, pour l'inspection non destructrice de matériaux, pour le contrôle de la radioactivité aux points d'entrée et de sorties de sites et pour le contrôle de déchets radioactifs.
- dans le domaine géophysique, par exemple pour l'évaluation de la radioactivité naturelle des sols.
- dans le domaine de la physique fondamentale et, en particulier, de la physique nucléaire.
- dans le domaine de la sécurité des biens et des personnes, par exemple pour la sécurité d'infrastructures critiques, le contrôle de marchandises en circulation (bagages, conteneurs, véhicules...) ainsi que pour la radioprotection des travailleurs des secteurs industriel, nucléaire et médical.
- dans le domaine de l'imagerie médicale.

### REFERENCES CITEES

[1] Moser, S. W.; Harder, W. F.; Hurlbut, C. R.; Kusner, M. R. "Principles and practice of plastic scintillator design", Radiat. Phys. Chem., 1993, Vol. 41, No. 1/2, 31-36.

[2] Bertrand, G. H. V.; Hamel, M.; Sguerra, F. "Current status on plastic scintillators modifications", Chem. Eur. J., 2014, 20, 15660-15685.

[3] Wilkinson, D. H. "The Phoswich - A Multiple Phosphor", Rev. Sci. Instrum. 1952, 23, 414-417.

[4] M. Wahl, "Time-Correlated Single Photon Counting", note technique de la société PicoQuant, 2014.

[5] D. V. O'Connor, D. Phillips, Time Correlated Single Photon Counting, Academic Press, New York, 1984, pages 25 à 34.

[6] Rohwer, L. S., Martin, J. E.; "Measuring the absolute quantum efficiency of luminescent materials", J. Lumin. 2005, 115, pages 77-90.

[7] Velapoli, R. A.; Mielenz, K. D. "A Fluorescence Standard Reference Material: Quinine Sulfate Dihydrate", Appl. Opt., 1981, 20, 1718.

[8] WO 2013076281.

[9] Techniques de l'ingénieur, Extrusion - extrusion monovis (partie 1), Référence AM3650, publication de 2002.

[10] Techniques de l'ingénieur, Mesures de radioactivité par scintillation liquide, Référence p2552, publication du 10/03/2004.

[11] WO 2013076279.

## Revendications

**1.** Matériau hybride pour la mesure par scintillation plastique comprenant :

- une matrice polymérique ; et,
- un mélange fluorescent incorporé dans la matrice polymérique et comprenant en concentration molaire par rapport au nombre total de moles de fluorophore primaire dans le mélange fluorescent incorporé :

i) 95,6 % à 99,1 % molaire d'un fluorophore primaire principal constitué de naphtalène ; et
ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1.

**2.** Matériau hybride selon la revendication 1, dans lequel le mélange fluorescent incorporé comprend 96 % à 99,1 % molaire du fluorophore primaire principal.

**3.** Matériau hybride selon la revendication 1 ou 2, dans lequel le mélange fluorescent incorporé comprend en outre un fluorophore secondaire à une concentration massique par rapport à la masse du matériau hybride qui est comprise entre 0,002 % et 0,5 % massique.

**4.** Procédé de fabrication d'un matériau hybride tel que défini par l'une quelconque des revendications 1 à 3 par polymérisation via un milieu de polymérisation, le procédé comprenant les étapes successives suivantes :

a) disposer d'un milieu de polymérisation comprenant :

- des monomères, des oligomères ou leurs mélanges destinés à former au moins un polymère constitutif d'une matrice polymérique telle que définie dans l'une quelconque des revendications 1 à 3 ;
- un mélange fluorescent liquide comprenant en concentration molaire par rapport au nombre total de moles de fluorophore primaire dans le mélange fluorescent liquide:

i) 95,6 % à 99,1 % molaire d'un fluorophore primaire principal constitué de naphtalène ; et
ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 ;

b) polymériser le milieu de polymérisation afin d'obtenir le matériau hybride.

**5.** Pièce pour la détection par scintillation plastique, composée en tout ou partie d'un matériau hybride tel que défini selon l'une quelconque des revendications 1 à 3.

**6.** Pièce pour la détection par scintillation plastique selon la revendication 5, dans laquelle la pièce a une forme :

- parallélépipédique et est un compartiment scintillateur plastique apte à être incorporé dans un dispositif pour la détection par scintillation plastique, ou

- cylindrique et est une fibre optique scintillante (10) comprenant une fibre polymère (11) composée en tout ou partie du matériau hybride et pourvue ou non d'une gaine (12) recouvrant la fibre polymère et composée en tout ou partie d'un matériau de gainage pour fibre optique dont l'indice de réfraction est inférieur à celui du matériau hybride, le matériau hybride comprenant une matrice polymérique constituée en totalité ou en partie d'au moins un polymère qui n'est pas réticulé.

**7.** Procédé de fabrication par extrusion d'une pièce pour la détection par scintillation plastique et composée en tout ou partie d'un matériau hybride, la pièce étant telle que définie selon la revendication 5 ou 6, le procédé comprenant les étapes successives suivantes :

a') disposer d'un mélange d'extrusion comprenant :

- des ingrédients polymérisés destinés à former une matrice polymérique telle que définie selon la revendication 5 ;
- un mélange fluorescent pour extrusion comprenant en concentration molaire par rapport au nombre total de moles de fluorophore primaire dans le mélange fluorescent pour extrusion :

i) 95,6 % à 99,1 % molaire d'un fluorophore primaire principal constitué de naphtalène ; et
ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 ;

b') sous une atmosphère d'extrusion à une température d'extrusion comprise entre 170 °C et 200 °C, extruder le mélange d'extrusion au travers d'une filière afin d'obtenir la pièce composée en tout ou partie d'un matériau hybride.

**8.** Procédé de fabrication par polymérisation d'une pièce pour la détection par scintillation plastique et composée en tout ou partie d'un matériau hybride, la pièce étant telle que définie par la revendication 5 ou 6, le procédé comprenant au moins une polymérisation via un milieu de polymérisation selon les étapes successives suivantes :

a) dans un premier moule, disposer d'un premier milieu de polymérisation comprenant :

- des monomères, des oligomères ou leurs mélanges destinés à former au moins un polymère constitutif d'une matrice polymérique telle que définie dans la revendication 1 ;
- un mélange fluorescent liquide comprenant en concentration molaire par rapport au nombre total de moles de fluorophore primaire dans le mélange fluorescent liquide :

i) 95,6 % à 99,1 % molaire d'un fluorophore primaire principal constitué de naphtalène ; et
ii) 0,9 % à 4,4 % molaire d'un fluorophore primaire supplémentaire dont le centroïde du spectre d'absorption lumineuse et du spectre d'émission de fluorescence ont respectivement une longueur d'onde comprise entre 250 nm et 340 nm et comprise entre 330 nm et 380 nm, la constante de décroissance de fluorescence est comprise entre 1 ns et 10 ns, et le rendement quantique de fluorescence dans un solvant apolaire est compris entre 0,2 et 1 ;

b) polymériser le premier milieu de polymérisation afin d'obtenir directement la pièce ou une ébauche de la pièce qui est ensuite modifiée pour obtenir la pièce.

**9.** Dispositif pour la détection par scintillation plastique comprenant une pièce telle que définie par la revendication 5 ou 6 pour la détection par scintillation plastique en tant qu'élément scintillateur plastique hybride, la pièce étant composée en tout ou partie d'un matériau hybride tel que défini selon l'une quelconque des revendications 1 à 3 et étant couplée à un module d'acquisition électronique de telle sorte que le module est apte à collecter le rayonnement radioluminescent émis par la pièce lorsque cette dernière est mise en contact avec un rayonnement ionisant ou une particule ionisante.

**10.** Dispositif pour la détection par scintillation plastique selon la revendication 9, dans lequel l'élément scintillateur plastique hybride est un premier élément scintillateur plastique hybride (1), le dispositif comprenant en outre un

second élément scintillateur plastique rapide (2) dont la constante de décroissance de fluorescence est inférieure à celle du premier élément scintillateur plastique hybride (1), ces éléments scintillateur plastiques (1) et (2) formant un ensemble scintillateur plastique, le dispositif étant par exemple de type phoswich.

**11.** Dispositif pour la détection par scintillation plastique selon la revendication 9 ou 10, dans lequel les éléments scintillateur plastique (1) et (2) ont des épaisseurs différentes, de telle sorte que le dispositif comprend un élément scintillateur plastique fin et un élément scintillateur rapide épais ; le premier élément scintillateur plastique hybride (1) fin étant en amont et le second élément scintillateur plastique rapide (2) épais étant en aval, par référence au sens R de propagation du rayonnement ionisant ou de la particule ionisante vis-à-vis du dispositif.

**12.** Dispositif pour la détection par scintillation plastique selon l'une quelconque des revendications précédentes 9 à 11, dans lequel la pièce comprend un unique élément scintillateur plastique hybride.

**13.** Appareillage pour la détection par scintillation plastique comprenant un dispositif tel que défini selon l'une quelconque des revendications 9 à 12, constitué par un appareil portatif pour la détection de rayonnement ionisant, un portique de détection ou un détecteur CCD.

**14.** Procédé de fabrication d'un dispositif pour la détection par scintillation plastique tel que défini par l'une quelconque des revendications 9 à 12, dans lequel la pièce en tant qu'élément scintillateur plastique hybride est couplée au module d'acquisition électronique, de telle sorte que le module est apte à collecter le rayonnement radioluminescent émis par la pièce lorsque cette dernière est mise en contact avec un rayonnement ionisant ou une particule ionisante.

**15.** Procédé de mesure par scintillation plastique, le procédé comprenant les étapes successives suivantes :

i) un dispositif tel que défini selon l'une quelconque des revendications 9 à 12 ou un appareillage tel que défini selon la revendication 13 est mis en contact avec un rayonnement ionisant ou une particule ionisante afin que la pièce comprise dans le dispositif émette un rayonnement radioluminescent ; et
ii) le rayonnement radioluminescent est mesuré avec le module d'acquisition électronique du dispositif.

## Patentansprüche

**1.** Hybridmaterial für die Messung durch Kunststoff-Szintillation, umfassend :

- eine Polymermatrix; und
- eine Fluoreszenzmischung, die in die Polymermatrix eingearbeitet ist und in molarer Konzentration, bezogen auf die Gesamtmolzahl des primären Fluorophors in der eingearbeiteten Fluoreszenzmischung, umfasst :

i) 95,6 Mol-% bis 99,1 Mol-% eines primären Hauptfluorophors, der aus Naphthalin besteht, und
ii) 0,9 Mol-% bis 4,4 Mol-% eines primären zusätzlichen Fluorophors, dessen Zentroid des Lichtabsorptionsspektrums und des Fluoreszenzemissionsspektrums eine Wellenlänge zwischen 250 nm und 340 nm bzw. zwischen 330 nm und 380 nm aufweist, dessen Fluoreszenzabklingkonstante zwischen 1 ns und 10 ns liegt und dessen Fluoreszenzquantenausbeute in einem apolaren Lösungsmittel zwischen 0,2 und 1 liegt.

**2.** Hybridmaterial nach Anspruch 1, wobei die eingearbeitete Fluoreszenzmischung 96 Mol-% bis 99,1 Mol-% des primären Hauptfluorophors umfasst.

**3.** Hybridmaterial nach Anspruch 1 oder 2, wobei die eingearbeitete Fluoreszenzmischung zusätzlich einen sekundären Fluorophor in einer Massenkonzentration, bezogen auf die Masse des Hybridmaterials, die zwischen 0,002 Massen-% und 0,5 Massen-% liegt, umfasst.

**4.** Verfahren zur Herstellung eines Hybridmaterials, wie es in einem der Ansprüche 1 bis 3 definiert ist, durch Polymerisation über ein Polymerisationsmedium, wobei das Verfahren die folgenden aufeinanderfolgenden Schritte umfasst:

a) über ein Polymerisationsmedium verfügen, das enthält:

- Monomere, Oligomere oder deren Mischungen, die dazu bestimmt sind, mindestens ein Polymer zu bilden,

das Bestandteil einer Polymermatrix ist, wie sie in einem der Ansprüche 1 bis 3 definiert ist;
- eine flüssige Fluoreszenzmischung, die in molarer Konzentration, bezogen auf die Gesamtmolzahl des primären Fluorophors in der flüssigen Fluoreszenzmischung, umfasst:

i) 95,6 Mol-% bis 99,1 Mol-% eines primären Hauptfluorophors, der aus Naphthalin besteht, und
ii) 0,9 bis 4,4 Mol-% eines zusätzlichen primären Fluorophors, dessen Zentroid des Lichtabsorptionsspektrums und des Fluoreszenzemissionsspektrums eine Wellenlänge zwischen 250 nm und 340 nm bzw. zwischen 330 nm und 380 nm aufweist, dessen Fluoreszenzabklingkonstante zwischen 1 ns und 10 ns liegt und dessen Fluoreszenzquantenausbeute in einem apolaren Lösungsmittel zwischen 0,2 und 1 liegt;

b) Polymerisieren des Polymerisationsmediums, um das Hybridmaterial zu erhalten.

**5.** Teil für die Detektion durch Kunststoff-Szintillation, das ganz oder teilweise aus einem Hybridmaterial besteht, wie es nach einem der Ansprüche 1 bis 3 definiert ist.

**6.** Teil für die Detektion durch Kunststoff-Szintillation nach Anspruch 5, wobei das Teil:

- quaderförmig ist und ein Kunststoff-Szintillatorfach ist, das geeignet ist, in eine Vorrichtung für die Detektion durch Kunststoff-Szintillation eingebaut zu werden, oder
- zylindrisch ist und eine optische Szintillationsfaser (10) ist, die eine Polymerfaser (11) umfasst, die ganz oder teilweise aus dem Hybridmaterial besteht und mit oder ohne einen Mantel (12) versehen ist, der die Polymerfaser bedeckt und ganz oder teilweise aus einem Ummantelungsmaterial für optische Fasern besteht, dessen Brechungsindex niedriger ist als der des Hybridmaterials, wobei das Hybridmaterial eine Polymermatrix umfasst, die ganz oder teilweise aus mindestens einem Polymer besteht, das nicht vernetzt ist.

**7.** Verfahren zur Herstellung durch Extrusion eines Teils für die Detektion durch Kunststoff-Szintillation und ganz oder teilweise aus einem Hybridmaterial besteht, wobei das Teil wie nach Anspruch 5 oder 6 definiert ist, wobei das Verfahren die folgenden aufeinanderfolgenden Schritte umfasst:

a’) Bereitstellen einer Extrusionsmischung, umfassend :

- polymerisierte Bestandteile zur Bildung einer Polymermatrix, wie sie nach Anspruch 5 definiert ist ;
- eine fluoreszierende Mischung zur Extrusion, die in molarer Konzentration, bezogen auf die Gesamtmolzahl des primären Fluorophors in der fluoreszierenden Mischung zur Extrusion, umfasst :

i) 95,6 Mol-% bis 99,1 Mol-% eines primären Hauptfluorophors, der aus Naphthalin besteht, und
ii) 0,9 bis 4,4 Mol-% eines zusätzlichen primären Fluorophors, dessen Zentroid des Lichtabsorptionsspektrums und des Fluoreszenzemissionsspektrums eine Wellenlänge zwischen 250 nm und 340 nm bzw. zwischen 330 nm und 380 nm aufweist, dessen Fluoreszenzabklingkonstante zwischen 1 ns und 10 ns liegt und dessen Fluoreszenzquantenausbeute in einem apolaren Lösungsmittel zwischen 0,2 und 1 liegt;

b’) unter einer Extrusionsatmosphäre bei einer Extrusionstemperatur zwischen 170 °C und 200 °C das Extrusionsgemisch durch eine Düse extrudieren, um das Teil zu erhalten, das ganz oder teilweise aus einem Hybridmaterial besteht.

**8.** Verfahren zur Herstellung durch Polymerisation eines Teils für die Detektion durch Kunststoff-Szintillation, das ganz oder teilweise aus einem Hybridmaterial besteht, wobei das Teil wie in Anspruch 5 oder 6 definiert ist, wobei das Verfahren mindestens eine Polymerisation über ein Polymerisationsmedium gemäß den folgenden aufeinanderfolgenden Schritten umfasst:

a) in einer ersten Form ein erstes Polymerisationsmedium bereitstellen, das enthält:

- Monomere, Oligomere oder deren Mischungen, die dazu bestimmt sind, mindestens ein Polymer zu bilden, das Bestandteil einer Polymermatrix ist, wie sie in Anspruch 1 definiert ist;
- eine flüssige Fluoreszenzmischung, die in molarer Konzentration, bezogen auf die Gesamtmolzahl des primären Fluorophors in der flüssigen Fluoreszenzmischung, umfasst :

i) 95,6 Mol-% bis 99,1 Mol-% eines primären Hauptfluorophors, der aus Naphthalin besteht, und
ii) 0,9 bis 4,4 Mol-% eines zusätzlichen primären Fluorophors, dessen Zentroid des Lichtabsorptionsspektrums und des Fluoreszenzemissionsspektrums eine Wellenlänge zwischen 250 nm und 340 nm bzw. zwischen 330 nm und 380 nm aufweist, dessen Fluoreszenzabklingkonstante zwischen 1 ns und 10 ns liegt und dessen Fluoreszenzquantenausbeute in einem apolaren Lösungsmittel zwischen 0,2 und 1 liegt;

b) Polymerisieren des ersten Polymerisationsmediums, um direkt das Teil oder einen Rohling des Teils zu erhalten, das dann modifiziert wird, um das Teil zu erhalten.

**9.** Vorrichtung zur Detektion durch Kunststoff-Szintillation mit einem Teil, wie in Anspruch 5 oder 6 definiert, zur Detektion durch Kunststoff-Szintillation als hybrides Kunststoffszintillationselement, wobei das Teil ganz oder teilweise aus einem Hybridmaterial besteht, wie es in einem der Ansprüche 1 bis 3 definiert ist, und mit einem elektronischen Erfassungsmodul gekoppelt ist, so dass das Modul geeignet ist, radiolumineszente Strahlung zu sammeln, die von dem Teil emittiert wird, wenn das Teil mit ionisierender Strahlung oder einem ionisierenden Teilchen in Kontakt gebracht wird.

**10.** Vorrichtung zur Detektion durch Kunststoffszintillation nach Anspruch 9, wobei das hybride Kunststoffszintillatorelement ein erstes hybrides Kunststoffszintillatorelement (1) ist, wobei die Vorrichtung außerdem ein zweites schnelles Kunststoffszintillatorelement (2) umfasst, dessen Fluoreszenzabklingkonstante kleiner ist als die des ersten hybriden Kunststoffszintillatorelements (1), wobei diese Kunststoffszintillatorelemente (1) und (2) eine Kunststoffszintillatoreinheit bilden, wobei die Vorrichtung beispielsweise vom Phoswich-Typ ist.

**11.** Vorrichtung zur Detektion durch Kunststoff-Szintillation nach Anspruch 9 oder 10, wobei die KunststoffSzintillatorelemente (1) und (2) unterschiedliche Dicken aufweisen, so dass die Vorrichtung ein dünnes Kunststoff-Szintillatorelement und ein dickes schnelles Szintillatorelement umfasst; wobei das erste dünne Hybrid-Kunststoff-Szintillatorelement (1) stromaufwärts und das zweite dicke schnelle Kunststoff-Szintillatorelement (2) stromabwärts liegt, bezogen auf die Richtung R der Ausbreitung der ionisierenden Strahlung oder des ionisierenden Partikels gegenüber der Vorrichtung.

**12.** Vorrichtung zur Detektion durch Kunststoff-Szintillation nach einem der vorhergehenden Ansprüche 9 bis 11, wobei das Teil ein einzelnes hybrides Kunststoff-Szintillatorelement umfasst.

**13.** Apparatur zur Detektion durch Kunststoff-Szintillation mit einer Vorrichtung, wie sie nach einem der Ansprüche 9 bis 12 definiert ist, bestehend aus einem tragbaren Gerät zur Detektion ionisierender Strahlung, einem Detektorportal oder einem CCD-Detektor.

**14.** Verfahren zur Herstellung einer Vorrichtung zur Detektion durch Kunststoff-Szintillation, wie in einem der Ansprüche 9 bis 12 definiert, wobei das Teil als hybrides Kunststoffszintillationselement mit dem elektronischen Erfassungsmodul gekoppelt ist, so dass das Modul geeignet ist, die radiolumineszente Strahlung zu sammeln, die von dem Teil emittiert wird, wenn das Teil mit ionisierender Strahlung oder ein ionisierendes Partikel in Kontakt gebracht wird.

**15.** Verfahren zur Messung mittels Plastikszintillation, wobei das Verfahren die folgenden aufeinanderfolgenden Schritte umfasst:

i) eine Vorrichtung, wie sie in einem der Ansprüche 9 bis 12 definiert ist, oder ein Apparatur, wie es in Anspruch 13 definiert ist, mit ionisierender Strahlung oder einer ionisierenden Partikel in Kontakt gebracht wird, damit das in der Vorrichtung enthaltene Teil radiolumineszente Strahlung aussendet; und
ii) die radiolumineszierende Strahlung mit dem elektronischen Erfassungsmodul der Vorrichtung gemessen wird.

## Claims

**1.** Hybrid material for plastic scintillation measurement comprising:

- a polymeric matrix; and
- a fluorescent mixture incorporated in the polymeric matrix and comprising, in a molar concentration with respect to the total number of moles of primary fluorophore in the incorporated fluorescent mixture:

i) from 95.6 molar% to 99.1 molar% of a main primary fluorophore consisting of naphthalene; and
ii) from 0.9 molar% to 4.4 molar% of an additional primary fluorophore, the centroid of the light absorption spectrum and of the fluorescence emission spectrum of which have respectively a wavelength comprised between 250 nm and 340 nm and comprised between 330 nm and 380 nm, the fluorescence decay constant of which is comprised between 1 ns and 10 ns and the fluorescence quantum yield in a nonpolar solvent of which is comprised between 0.2 and 1.

**2.** Hybrid material according claim 1, wherein the incorporated fluorescent mixture comprises from 96 molar% to 99.1 molar% of the main primary fluorophore.

**3.** Hybrid material according to claim 1 or 2, wherein the incorporated fluorescent mixture further comprises a secondary fluorophore at a concentration by weight with respect to the weight of the hybrid material which is comprised between 0.002% and 0.5% by weight.

**4.** Process for the manufacture of a hybrid material as defined by any one of claims 1 to 3, by polymerization via a polymerization medium, the process comprising the following successive steps:

a) having available a polymerization medium comprising:

- monomers, oligomers or their mixtures intended to form at least one constituent polymer of a polymeric matrix as defined in any one of claims 1 to 3;
- a liquid fluorescent mixture comprising, in a molar concentration with respect to the total number of moles of primary fluorophore in the liquid fluorescent mixture:

i) from 95.6 molar% to 99.1 molar% of a main primary fluorophore consisting of naphthalene; and
ii) from 0.9 molar% to 4.4 molar% of an additional primary fluorophore, the centroid of the light absorption spectrum and of the fluorescence emission spectrum of which have respectively a wavelength comprised between 250 nm and 340 nm and comprised between 330 nm and 380 nm, the fluorescence decay constant of which is comprised between 1 ns and 10 ns, and the fluorescence quantum yield in a nonpolar solvent of which is comprised between 0.2 and 1;

b) polymerizing the polymerization medium in order to obtain the hybrid material.

**5.** Part for plastic scintillation detection composed, completely or partially, of a hybrid material as defined by any one of claims 1 to 3.

**6.** Part for plastic scintillation detection according to claim 5, wherein the part has a :

- parallelepipedal shape and is a plastic scintillator compartment capable of being incorporated in a device for plastic scintillation detection, or
- cylindrical shape and is a scintillating optical fiber (10) comprising a polymer fiber (11) composed, completely or partially, of the hybrid material and provided or not provided with a sheath (12) covering the polymer fiber and composed, completely or partially, of a sheathing material for an optical fiber, the refractive index of which is less than that of the hybrid material, the hybrid material comprising a polymeric matrix constituted, completely or partially, of at least one polymer which is not crosslinked.

**7.** Process for the manufacture by extrusion of a part for plastic scintillation detection and composed, completely or partially, of a hybrid material, the part being as defined according to claim 5 or 6, the process comprising the following successive steps:

a') having available an extrusion mixture comprising:

- polymerized ingredients intended to form a polymeric matrix as defined according to claim 5 ;
- a fluorescent mixture for extrusion comprising, in a molar concentration with respect to the total number of moles of primary fluorophore in the fluorescent mixture for extrusion:

i) from 95.6 molar% to 99.1 molar% of a main primary fluorophore consisting of naphthalene; and
ii) from 0.9 molar% to 4.4 molar% of an additional primary fluorophore, the centroid of the light absorption

spectrum and of the fluorescence emission spectrum of which respectively have a wavelength comprised between 250 nm and 340 nm and comprised between 330 nm and 380 nm, the fluorescence decay constant of which is comprised between 1 ns and 10 ns and the fluorescence quantum yield in a nonpolar solvent of which is comprised between 0.2 and 1;

b') under an extrusion atmosphere at an extrusion temperature comprised between 170°C and 200°C, extruding the extrusion mixture through a die in order to obtain the part composed, completely or partially, of a hybrid material.

**8.** Process for the manufacture by polymerization of a part for plastic scintillation detection and composed, completely or partially, of a hybrid material, the part being as defined by claim 5 or 6, the process comprising at least one polymerization via a polymerization medium according to the following successive steps:

a) in a first mold, having available a first polymerization medium comprising:

- monomers, oligomers or their mixtures intended to form at least one constituent polymer of a polymeric matrix as defined in claim 1 ;
- a liquid fluorescent mixture comprising, in a molar concentration with respect to the total number of moles of primary fluorophore in the liquid fluorescent mixture:

i) from 95.6 molar% to 99.1 molar% of a main primary fluorophore consisting of naphthalene; and
ii) from 0.9 molar% to 4.4 molar% of an additional primary fluorophore, the centroid of the light absorption spectrum and of the fluorescence emission spectrum of which respectively have a wavelength comprised between 250 nm and 340 nm and comprised between 330 nm and 380 nm, the fluorescence decay constant of which is comprised between 1 ns and 10 ns and the fluorescence quantum yield in a nonpolar solvent of which is comprised between 0.2 and 1;

b) polymerizing the first polymerization medium in order to directly obtain the part or a preform of the part which is subsequently modified in order to obtain the part.

**9.** Device for plastic scintillation detection comprising a part as defined according to claim 5 or 6 for plastic scintillation detection as hybrid plastic scintillator element, the part being composed, completely or partially, of a hybrid material as defined according to any one of claims 1 to 3, and the part being coupled to an electronic acquisition module so that the module is capable of collecting the radio-luminescent radiation emitted by the part when the latter is brought into contact with ionizing radiation or an ionizing particle.

**10.** Device for plastic scintillation detection according to claim 9, wherein the hybrid plastic scintillator element is a first hybrid plastic scintillator element (1), the device further comprising a second fast plastic scintillator element (2), the fluorescence decay constant of which is less than that of the first hybrid plastic scintillator element (1), these plastic scintillator elements (1) and (2) forming a plastic scintillator assembly, the device being for example a device of phoswich type.

**11.** Device for plastic scintillation detection according to claim 9 or 10, wherein the plastic scintillator elements (1) and (2) have different thicknesses, so that the device comprises a thin plastic scintillator element and a thick fast scintillator element ; the thin first hybrid plastic scintillator element (1) being upstream and the thick second fast plastic scintillator element (2) being downstream, with reference to the direction R of propagation of the ionizing radiation or of the ionizing particle with regard to the device.

**12.** Device for plastic scintillation detection according to any one of the preceding claims 9 to 11, wherein the part comprises a single hybrid plastic scintillator element.

**13.** Item of equipment for plastic scintillation detection comprising a device as defined according to any one of claims 9 to 12, constituted by a portable instrument for the detection of ionizing radiation, a walk-through scanner or a CCD detector.

**14.** Process for the manufacture of a device for plastic scintillation detection as defined by any one of claims 9 to 12, wherein the part as hybrid plastic scintillator element is coupled to the electronic acquisition module, so that the module is capable of collecting the radioluminescent radiation emitted by the part when the latter is brought into

contact with an ionizing radiation or an ionizing particle.

**15.** Plastic scintillation measurement method, the method comprising the following successive steps:

i) a device as defined according to any one of claims 9 to 12 or an item of equipment as defined according to claim 13, is brought into contact with an ionizing radiation or an ionizing particle in order for the part comprised in the device to emit radioluminescent radiation; and
ii) the radioluminescent radiation is measured with the electronic acquisition module of the device.

| référence | matrice polymérique | % en masse PPO | % en masse napht. | ratio molaire napht./PPO | ratio molaire PPO/napht. | tau biexponentiel (ns) | tau monoexponentiel médian (ns) | khi carré |
|---|---|---|---|---|---|---|---|---|
| E174 | st | 0 | 5 | 100,00% | 0,00% | 48,9 (15) + 96,0 (85) | 87,5 | 1,97 |
| E189 | st | 0,1 | 5 | 98,85% | 1,15% | 25,2 (32) + 73,2 (68) | 65,5 | 2,15 |
| E196A | st | 0,2 | 5 | 97,74% | 2,26% | 61,7 (46) + 19,8 (54) | 48,7 | 2,52 |
| E196B | st | 0,3 | 5 | 96,64% | 3,36% | 55,4 (42) + 18,2 (58) | 35 | 4,23 |
| E198A | st | 0,4 | 5 | 95,57% | 4,43% | 57,1 (24) + 18,2 (76) | 28,3 | 3,38 |
| E198B | st | 0,5 | 5 | 94,52% | 5,48% | 49,9 (22) + 16,1 (78) | 23 | 3,82 |
| E198C | st | 0,6 | 5 | 93,50% | 6,50% | 55,3 (14) + 15,6 (86) | 18,8 | 2,92 |
| E198D | st | 0,7 | 5 | 92,50% | 7,50% | 61,9 (10) + 14,7 (90) | 16,8 | 2,75 |
| F15A | st | 0,8 | 3 | 86,62% | 13,38% | 14,3 (95) + 75,4 (5) | 15,5 | 2,25 |
| F15B | st | 0,9 | 3 | 85,19% | 14,81% | 12,8 (92) + 59,2 (8) | 14,3 | 2,05 |
| E166-4 | st/1,4 | 1 | 5 | 89,62% | 10,38% | 11,3 (80) + 38,9 (20) | 14,9 | 3,43 |
| E166-5 | st/1,4 | 2 | 5 | 81,19% | 18,81% | 10,8 | 10,8 | 1,38 |
| E166-6 | st/1,4 | 3 | 5 | 74,21% | 25,79% | 9,6 | 9,5 | 1,17 |
| EJ-200 | PVT | 100 | 0 | 0,00% | 100,00% | 2,54 | 2,54 | 0,74 |
| F24 | st | 0,05 | 3 | 99,04% | 0,96% | 76,9 (78) + 22,2 (22) | 70,3 | 2,11 |
| F30A | ST | 0,02 | 3 | 99,62% | 0,38% | 80,2 (80) + 25,7 (20) | 73,7 | 1,92 |
| F30B | ST | 0,02 | 3 | 99,62% | 0,38% | 80,2 (80) + 25,7 (20) | 73,9 | 1,92 |

FIG. 1

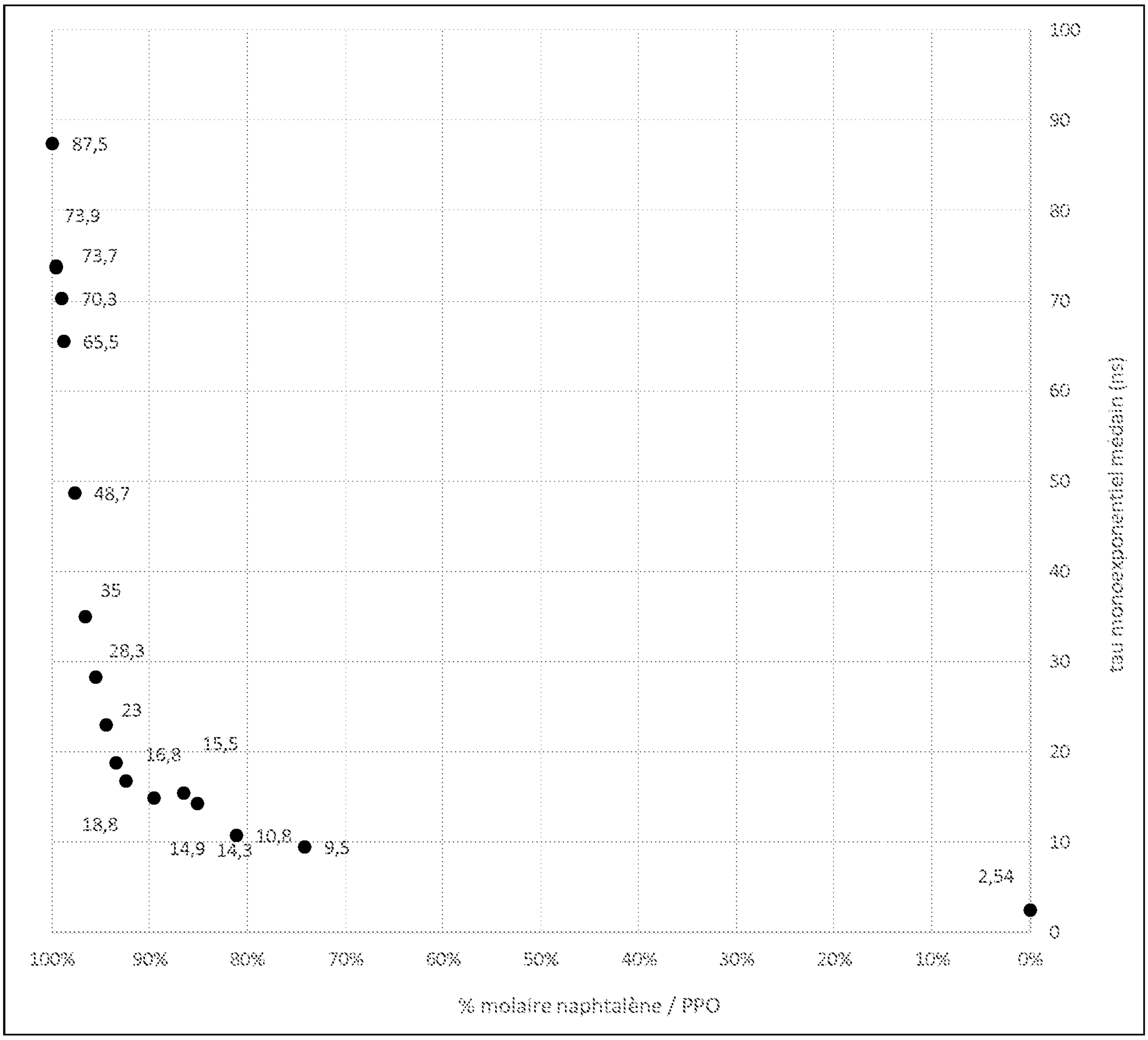
87,5
73,9
73,7
70,3
65,5
48,7
35
28,3
23
16,8
15,5
18,8
14,9
14,3
10,8
9,5
2,54
100
90
80
70
60
50
40
30
20
10
0
tau monoexponentiel médian (ns)
100%
90%
80%
70%
60%
50%
40%
30%
20%
10%
0%
% molaire naphtalène / PPO

FIG. 2A

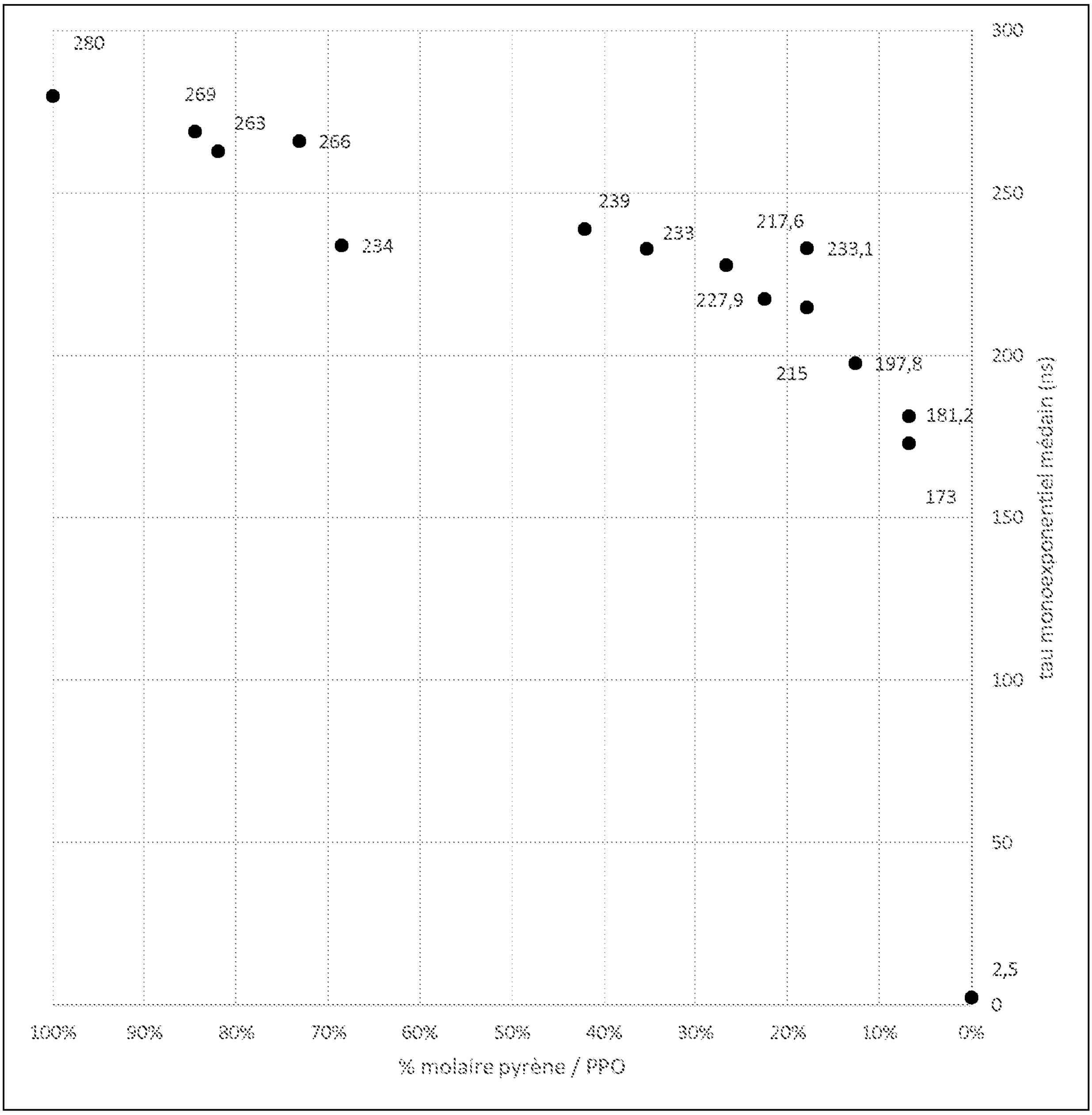
280
269
263
266
234
239
233
217,6
233,1
227,9
215
197,8
181,2
173
300
250
200
150
100
50
2,5
0
100%
90%
80%
70%
60%
50%
40%
30%
20%
10%
0%
% molaire pyrène / PPO
tau monoexponentiel médain (ns)

FIG. 2B

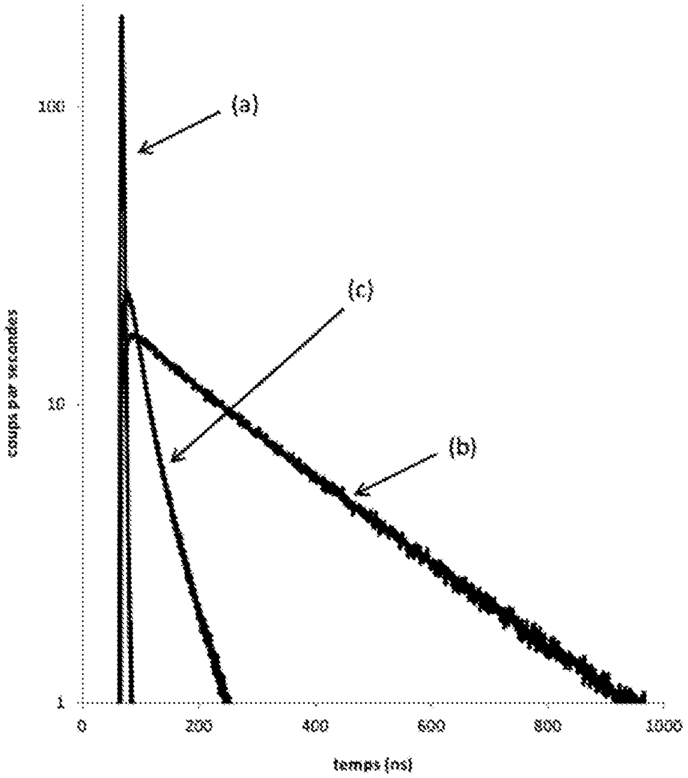
100
10
1
coups par secondes
(a)
(c)
(b)
0
200
400
600
800
1000
temps (ns)

FIG. 3

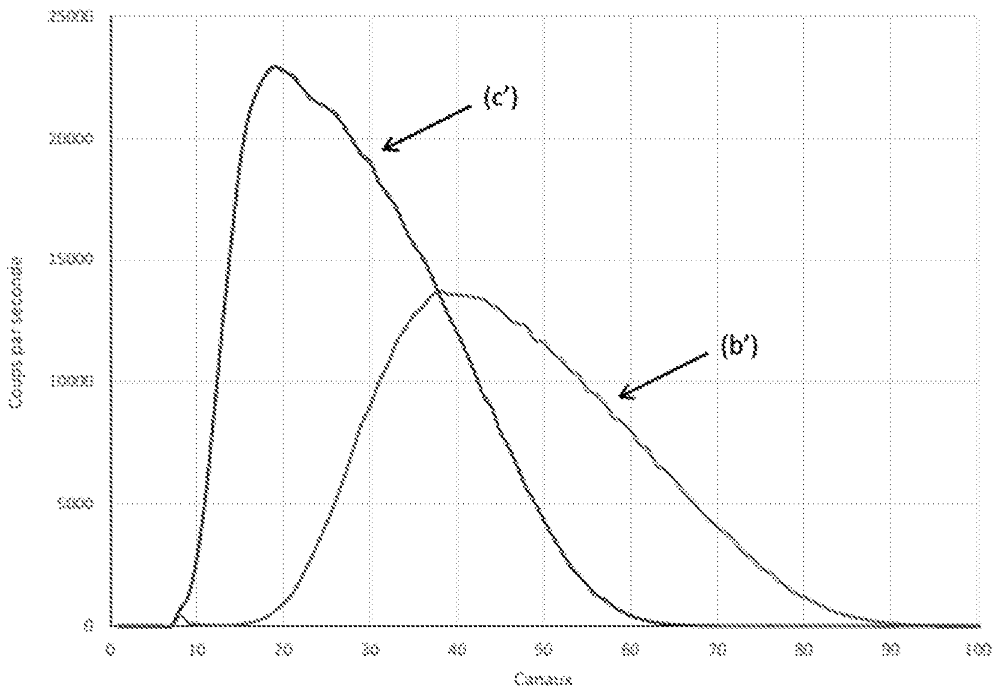
25000
20000
15000
10000
5000
0
Coups par seconde
(c')
(b')
0
10
20
30
40
50
60
70
80
90
100
Canaux

FIG. 4

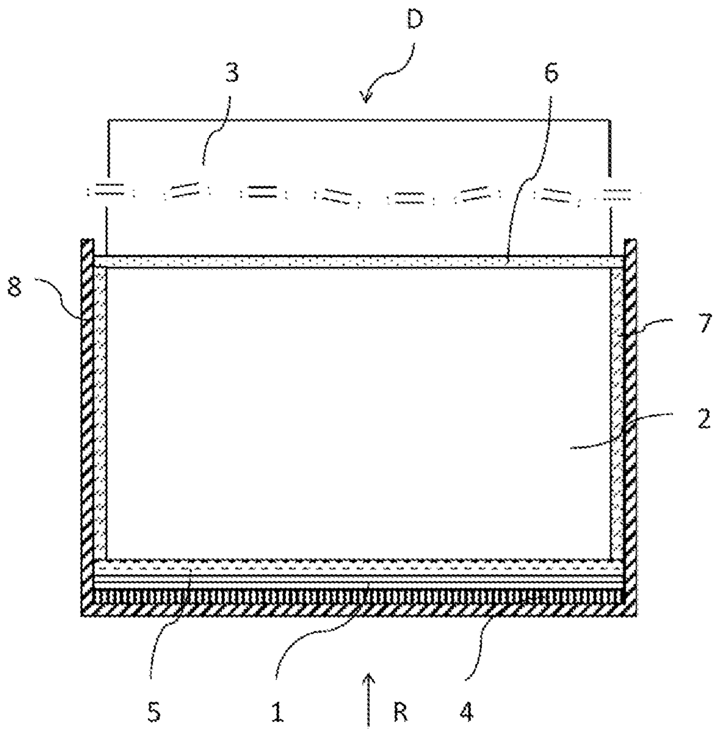


FIG. 5

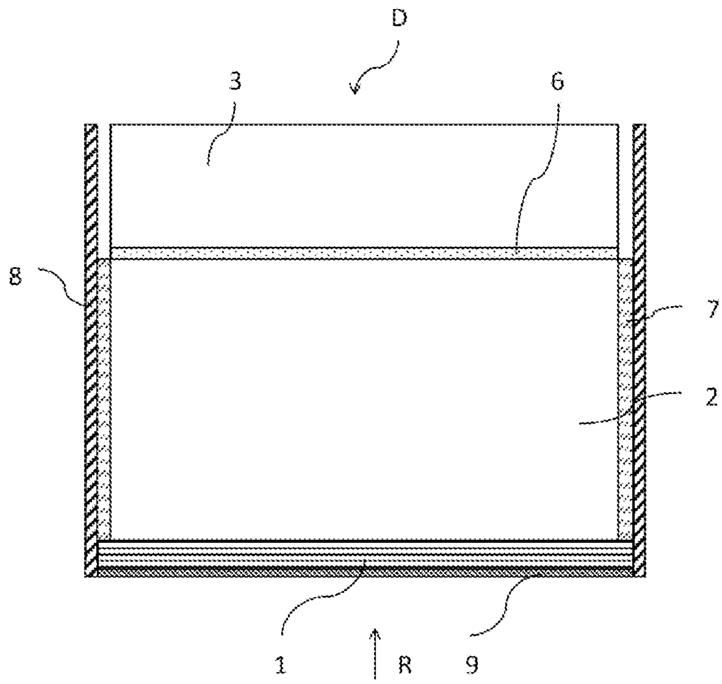


FIG. 6

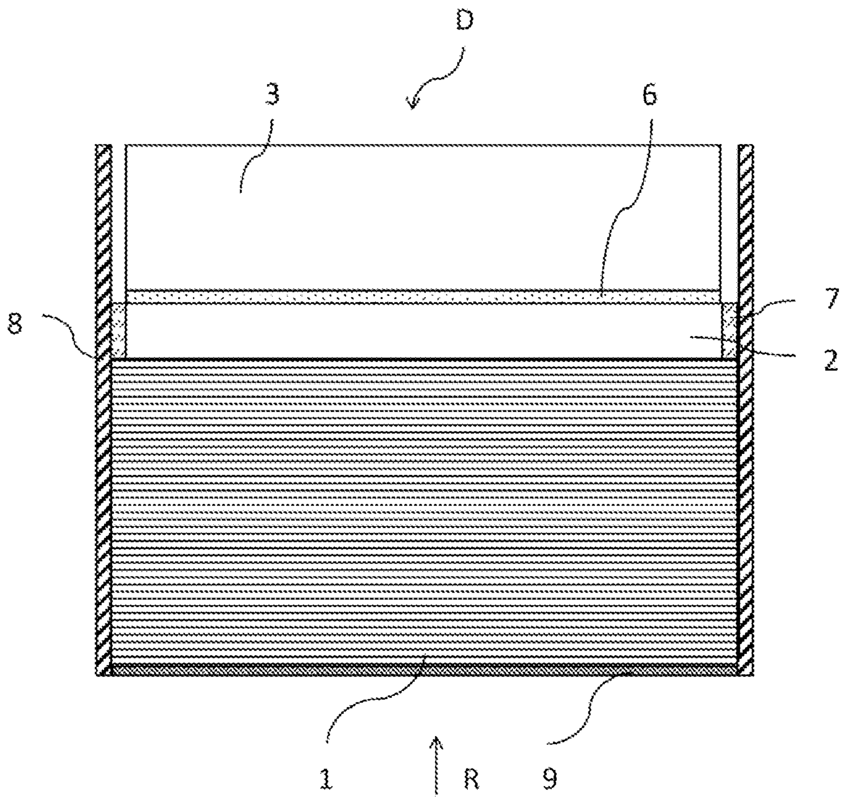


FIG. 7

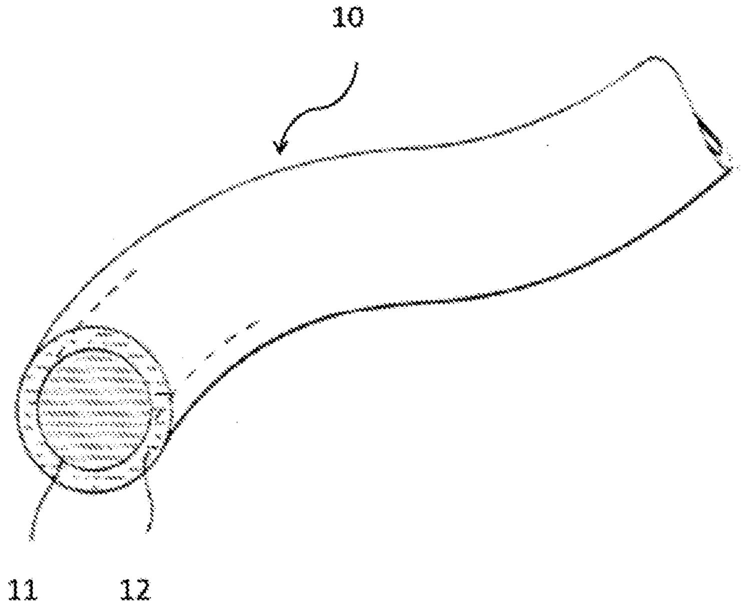


FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015118533 A1
- US 2014332689 A1
- EP 2655546 A1
- GB 1377703 A
- WO 2013076281 A
- WO 2013076279 A


### Littérature non-brevet citée dans la description


- **MOSER, S. W.; ; HARDER, W. F.; ; HURLBUT, C. R.; ; KUSNER, M. R.** Principles and practice of plastic scintillator design. *Radiat. Phys. Chem.,* 1993, vol. 41 (l/2), 31-36
- **BERTRAND, G. H. V.; ; HAMEL, M.; ; SGUERRA, F. ;.** Current status on plastic scintillators modifications. *Chem. Eur. J.,* 2014, vol. 20, 15660-15685
- **WILKINSON D. H.** The Phoswich - A Multiple Phosphor. *Rev. Sci. Instrum.,* 1952, vol. 23, 414-417
- **M. WAHL.** Time-Correlated Single Photon Counting. *M. Wahl, note technique de la société PicoQuant,* 2014
- **D. V. O'CONNOR, ; D. PHILLIPS.** Time Correlated Single Photon Counting. Academic Press, 1984, 25-34
- **ROHWER, L. S. ; MARTIN, J. E.** Measuring the absolute quantum efficiency of luminescent materials. *J. Lumin.,* 2005, vol. 115, 77-90
- **VELAPOLI, R. A. ; ; MIELENZ, K. D.** , ''A Fluorescence Standard référence Material: Quinine Sulfate Dihydrate'',. *Appl. Opt.,* 1981, vol. 20, 1718, https ://www.nist.gov/sites/default/files/documents/srm/SP260 -64.PDF
- Techniques de l'ingénieur. *Extrusion - extrusion monovis,* 2002
- Techniques de l'ingénieur. *Mesures de radioactivité par scintillation liquide,* 10 Mars 2004, 2552
- **MOSER, S. W. ; ; HARDER, W. F. ; ; HURLBUT, C. R.; ; KUSNER, M. R.** Principles and practice of plastic scintillator design. *Radiat. Phys. Chem.,* 1993, vol. 41 (1/2), 31-36
- **BERTRAND, G. H. V. ; ; HAMEL, M.; ; SGUERRA, F.** Current status on plastic scintillators modifications. *Chem. Eur. J.,* 2014, vol. 20, 15660-15685
- **WILKINSON, D. H.** The Phoswich - A Multiple Phosphor. *Rev. Sci. Instrum.,* 1952, vol. 23, 414-417
- **M. WAHL.** Time-Correlated Single Photon Counting. *note technique de la société PicoQuant,* 2014
- **D. V. O'CONNOR ; D. PHILLIPS.** Time Correlated Single Photon Counting. Academic Press, 1984, 25-34
- **ROHWER, L. S. ; MARTIN, J. E.;.** Measuring the absolute quantum efficiency of luminescent materials. *J. Lumin.,* 2005, vol. 115, 77-90
- **VELAPOLI, R. A.; ; MIELENZ, K. D.** A Fluorescence Standard Reference Material: Quinine Sulfate Dihydrate. *Appl. Opt.,* 1981, vol. 20, 1718
- Techniques de l'ingénieur. *Extrusion - extrusion monovis (partie 1),* 2002